# EUROPEAN PATENT APPLICATION

(11) **EP 3 965 215 A1**
(43) Date of publication of application: **09.03.2022**
(21) Application number: 21809906.7
(22) Date of filing: 25.03.2021
(51) Int. Cl.: H01M 50/293

(54) **SEPARATOR FOR ELECTROCHEMICAL APPARATUS, ELECTROCHEMICAL APPARATUS, AND ELECTRONIC APPARATUS**

(30) Priority: 30.06.2020 WO PCT/CN2020/099432
(71) Applicant: Ningde Amperex Technology Limited, Ningde City, Fujian Province 352100 (CN)
(72) Inventor: ZHANG, Yibo, Ningde Fujian 352100 (CN)
(74) Representative: Icosa
(86) International application number: PCT/CN2021/083037
(87) International publication number: WO 2022/001235

(57) **Abstract**

A partition for an electrochemical apparatus, the electrochemical apparatus, and an electronic apparatus are provided, and the partition for the electrochemical apparatus is of ionic insulation and has an intermediate layer and packaging layers, where the packaging layers are located on upper and lower surfaces of the intermediate layer; and temperature at which the packaging layers start to soften is at least 10°C lower than temperature at which the intermediate layer starts to soften. Through the partition in this application that is obtained through lamination of at least three layers of composite films, ionic insulation and packaging reliability can be ensured.

## Description

This application claims priority to International Patent Application No. PCT/CN2020/099432, filed with the World Intellectual Property Organization on June 30, 2020 and titled "PARTITION FOR ELECTROCHEMICAL APPARATUS, ELECTROCHEMICAL APPARATUS, AND ELECTRONIC APPARATUS", which is incorporated herein by reference in its entirety.

### TECHNICAL FIELD

This application relates to the field of electrochemical technologies, and specifically, to a partition for an electrochemical apparatus, an electrochemical apparatus, and an electronic apparatus.

### BACKGROUND

Lithium-ion batteries have many advantages such as high volume and mass energy density, long cycle life, high nominal voltage, low self-discharge rate, small size, and light weight, and are widely applied to the field of consumer electronics. With rapid development of electric vehicles and portable electronic devices in recent years, people have increasingly high requirements for energy density, safety, cycling performance, and the like of batteries, with an expectation for emergence of a new lithium-ion battery with comprehensively improved performance.

However, subject to limitations by an inherent electrochemical system of the lithium-ion battery, a working voltage of a single battery usually cannot exceed 5V. However, during actual use of the lithium-ion battery, many application scenarios require a high voltage, for example, the EV (Electric vehicle, electric vehicle) and ESS (Energy Storage System, energy storage system) scenarios. To increase an output voltage of the lithium-ion battery, a plurality of electrode assemblies are usually assembled in series in the prior art. For an electrode assembly using a conventional liquid electrolyte, an ionic insulation function needs to be implemented in series-connected cavities in a series structure to avoid an internal short circuit of a positive electrode and a negative electrode at different potentials under a liquid condition, and also to avoid decomposition and invalidity of the conventional liquid electrolyte at a high voltage. In addition, a partition is used as a portion of a packaging structure, and there are some requirements for parameters such as mechanical strength, a thickness, thermal stability, and electrochemical stability of the partition. Based on this, the conventional single basic material can hardly meet a need to serve as the partition of the series electrode assembly, and a new partition needs to be developed to implement isolation of single batteries in series. Currently, common methods for preparing the partition are as follows: 1. A layer of composite sealing material for packaging is disposed on a surface of a high-temperature-resistant dense isolation material. 2. A surface of a high-temperature-resistant dense isolation material is modified, so that the isolation material can be directly and tightly bound to outer packaging, to implement sealing.

However, in an existing technology, the partition prepared in the first method is generally multilayer lamination of polymer materials of the same type, and has a large overall thickness. The material is prone to a structural damage under a high-temperature packaging condition, and has poor ion isolation performance. For the partition prepared in the second method, it is difficult to implement reliable packaging between the partition and the outer packaging, making the application of the partition difficult.

### SUMMARY

This application is intended to provide a partition for an electrochemical apparatus, an electrochemical apparatus, and an electronic apparatus, to improve packaging reliability and ion isolation effectiveness of a lithium-ion battery.

A first aspect of this application provides a partition for an electrochemical apparatus, with ionic insulation, including an intermediate layer and packaging layers, where the packaging layers are located on upper and lower surfaces of the intermediate layer; and temperature at which the packaging layers start to soften is at least 10°C lower than temperature at which the intermediate layer starts to soften.

In an embodiment of this application, the partition for the electrochemical apparatus is of ionic insulation, and includes an intermediate layer and packaging layers. The packaging layers are located on upper and lower surfaces of the intermediate layer. A material of the intermediate layer includes at least one of a carbon material, a first polymer material, or a metal material; a material of the packaging layers includes a second polymer material; and temperature at which the packaging layers start to soften is at least 10°C lower than temperature at which the intermediate layer starts to soften.

In an embodiment of this application, there are packaging layers on peripheral edges of two surfaces of the intermediate layer.

In an embodiment of this application, an area of the packaging layer accounts for 30% to 100% of an area of the intermediate layer.

In an embodiment of this application, there is a packaging layer on at least one surface of the intermediate layer.

In an embodiment of this application, the carbon material includes at least one of carbon felt, a carbon film, carbon black, acetylene black, fullerene, a conductive graphite film, or a graphene film.

In an embodiment of this application, the first polymer material includes: at least one of polyethylene terephthalate, polybutylene terephthalate, polyethylene naphthalate, polyether ether ketone, polyimide, polyamide, polyethylene glycol, polyamide-imide, polycarbonate, cyclic polyolefin, polyphenylene sulfide, polyvinyl acetate, polytetrafluoroethylene, polymethylene naphthalene, polyvinylidene fluoride, polyethylene naphthalate, polypropylene carbonate, poly(vinylidene fluoride-hexafluoropropylene), poly(vinylidene fluoride-co-chlorotrifluoroethylene), silicone, vinylon, polypropylene, acid anhydride modified polypropylene, polyethylene, ethylene and copolymerthereof, polyvinyl chloride, polystyrene, polyether nitrile, polyurethane, polyphenylene ether, polyester, polysulfone, amorphous α-olefin copolymer, or a derivative of the foregoing substances.

In an embodiment of this application, the metal material includes at least one of Ni, Ti, Ag, Au, Pt, Fe, Co, Cr, W, Mo, Pb, In, Zn, Al, Cu, or stainless steel.

In an embodiment of this application, the stainless steel includes at least one of 302 stainless steel, 304 stainless steel, or 316 stainless steel.

In an embodiment of this application, the second polymer material includes: polypropylene, acid anhydride modified polypropylene, polyethylene, ethylene and copolymerthereof, polyvinyl chloride, polystyrene, polyether nitrile, polyurethane, polyamide, polyester, amorphous α-olefin copolymer, or a derivative of the foregoing substances.

A second aspect of this application provides an electrochemical apparatus, where the electrochemical apparatus includes at least one partition, at least two electrode assemblies, an electrolyte, and outer packaging, and the electrode assemblies are located in a separate sealed cavity.

In an embodiment of this application, an outermost layer of the electrode assembly includes a separator, and the separator is adjacent to the partition.

In an embodiment of this application, an outermost layer of at least one electrode assembly includes a separator, and the separator is adjacent to the partition; and an outermost layer of at least one electrode assembly includes a current collector, and the current collector is adjacent to the other side of the partition.

In an embodiment of this application, an outermost layer of the electrode assembly includes a current collector, the current collector is adjacent to the partition, and current collectors of electrode assemblies on both sides of the partition have opposite polarities, and the partition is selected from at least one of Ni, Ti, Ag, Au, Pt, Fe, Co, Cr, W, Mo, Pb, In, Zn, or stainless steel.

In an embodiment of this application, the partition is of electronic insulation, an outermost layer of the electrode assembly includes a current collector, and the current collector is adjacent to the partition. A third aspect of this application provides an electronic apparatus, where the electronic apparatus includes the electrochemical apparatuses according to the second aspect.

Based on the partition for an electrochemical apparatus, the electrochemical apparatus, and the electronic apparatus provided in this application, the partition for an electrochemical apparatus is of ionic insulation, and includes an intermediate layer and packaging layers. The packaging layers are located on upper and lower surfaces of the intermediate layer. A material of the intermediate layer includes at least one of a carbon material, a first polymer material, or a metal material; a material of the packaging layers includes a second polymer material; and temperature at which the packaging layers start to soften is at least 10°C lower than temperature at which the intermediate layer starts to soften. Through the partition in this application, the ionic insulation and packaging reliability can be ensured.

### BRIEF DESCRIPTION OF DRAWINGS

To describe the technical solutions in the embodiments of this application and the prior art more clearly, the following briefly describes the accompanying drawings required for describing the embodiments and the prior art. Apparently, the accompanying drawings in the following description show merely some embodiments of this application.
FIG. 1 is a schematic cross-sectional view of a partition according to an embodiment of this application;
FIG. 2 is a schematic cross-sectional view of a partition according to another embodiment of this application;
FIG. 3 is a schematic top view of a partition according to an embodiment of this application;
FIG. 4 is a schematic cross-sectional view of a partition according to still another embodiment of this application;
FIG. 5 is a schematic cross-sectional view of a partition according to a fourth embodiment of this application;
FIG. 6 is a schematic cross-sectional view of a packaged electrode assembly according to an embodiment of this application;
FIG. 7 is a schematic diagram of an electrochemical apparatus according to Comparative Example 2 of this application;
FIG. 8 is a schematic diagram of an electrochemical apparatus according to Comparative Example 3 of this application; and
FIG. 9 is a schematic diagram of an electrochemical apparatus according to Comparative Example 4 of this application.

### DESCRIPTION OF EMBODIMENTS

To make the objectives, technical solutions, and advantages of this application more comprehensible, the following describes this application in detail with reference to embodiments and accompanying drawings. Apparently, the described embodiments are merely some but not all of the embodiments of this application. All other embodiments obtained by persons of ordinary skill in the art based on this application falls within the protection scope of this application.

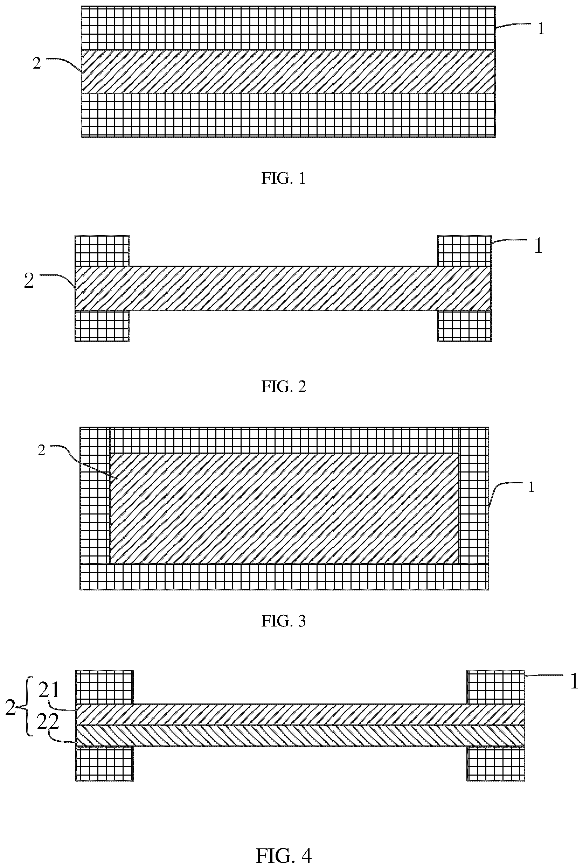

It should be noted that, in the specific embodiments of this application, an example in which a lithium-ion battery is used as an electrochemical apparatus is used to illustrate this application. However, the electrochemical apparatus in this application is not limited to the lithium-ion battery. As shown in FIG. 1, this application provides a partition for an electrochemical apparatus, with ionic insulation, including an intermediate layer 2 and packaging layers 1. The packaging layers 1 are located on upper and lower surfaces of the intermediate layer 2. A material of the intermediate layer 2 includes at least one of a carbon material, a first polymer material, or a metal material; a material of the packaging layers 1 includes a second polymer material; and temperature at which the packaging layers 1 start to soften (melting point or softening point) is at least 10°C lower than temperature at which the intermediate layer starts to soften.

In the partition for the electrochemical apparatus, the intermediate layer is a structural layer with high mechanical strength and a high melting point or softening point; the packaging layers are on two sides, and the packaging layers have a low melting point or softening point. The intermediate layer and the packaging layers all have advantages of good ionic insulation, specific thermal stability, and small thickness. The temperature at which the packaging layers start to soften is at least 10°C lower than the temperature at which the intermediate layer starts to soften, which can ensure packaging reliability and ionic insulation effect. The partition can be implemented through hot-pressing with at least three different layers of films, or can be implemented by applying the packaging layers on both sides of the intermediate layer.

As shown in FIG. 2, in an embodiment of this application, peripheral edges of the two surfaces of the intermediate layer 2 are covered by the packaging layers 1. That is, a surface portion of a main body of the intermediate layer 2 is not covered by the packaging layers. FIG. 3 is a schematic top view of this embodiment. An area of the packaging layer accounts for 30% to 100% of an area of the intermediate layer, and an absolute width of the packaging layer is greater than 2 mm, which can effectively improve strength of the packaging.

There are packaging layers on the peripheral edges of the two surfaces of the intermediate layer. For example, the peripheral edges of the two surfaces of the intermediate layer are covered by the packaging layers, which minimizes an amount and a proportion of a coating material of the packaging layers, and reduces a proportion of a non-effective substance, thereby increasing an energy density of the lithium-ion battery. In an embodiment of this application, there is a packaging layer on at least one surface of the intermediate layer. For example, at least one surface of the intermediate layer is completely covered by the packaging layer.

As shown in FIG. 4, in an embodiment of this application, the intermediate layer 2 includes a first structural layer 21 and a second structural layer 22 that are laminated, and there are packaging layers on peripheral edges of two surfaces of the first structural layer and the second structural layer that face away from each other. For example, the peripheral edges of the two surfaces of the first structural layer 21 and the second structural layer 22 that face away from each other may be covered by the packaging layers 1, to form a four-layer laminated structure. The foregoing structure further helps improve strength of the partition. The area of the packaging layer accounts for 30% to 100% of the area of the intermediate layer.

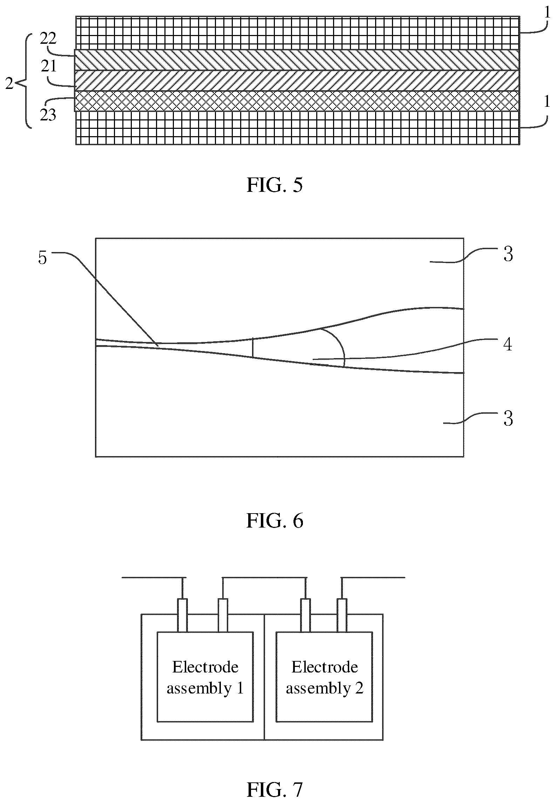

As shown in FIG. 5, in an embodiment of this application, the intermediate layer 2 includes a first structural layer 21, and a second structural layer 22 and a third structural layer 23 that are located on both sides of the first structural layer 21, and there is a packaging layer on at least one surface of the second structural layer and the third structural layer. For example, at least one surface of the second structural layer 22 and the third structural layer 23 may be completely covered by the packaging layer 1. For example, a surface of the second structural layer 22 is completely covered by the packaging layer 1, or a surface of the third structural layer 23 is completely covered by the packaging layer 1, or all surfaces of the second structural layer 22 and the third structural layer 23 are completely covered by the packaging layers 1. The foregoing structure helps further increase the strength of the partition, thereby improving performance of the lithium-ion battery.

The intermediate layer of the composite structure in this application can be prepared by pressing a plurality of sheets of the same or different materials, for example, pressing aluminum foil and copper foil, or pressing a PI sheet, Cu foil and a PI sheet that are laminated in sequence, or pressing stainless steel foil, Al foil, and stainless steel foil that are laminated in sequence. This application does not impose a particular limitation on a thickness of each sheet forming the intermediate layer of the composite structure, provided that the thickness of the intermediate layer meets a requirement of the partition of this application. This application does not impose a particular limitation on a quantity of sheets forming the intermediate layer of the composite structure, provided that the thickness of the intermediate layer meets a requirement of the partition of this application.

In an embodiment of this application, the carbon material includes at least one of carbon felt, a carbon film, carbon black, acetylene black, fullerene, a conductive graphite film, or a graphene film. In an embodiment of this application, the first polymer material includes: at least one of polyethylene terephthalate, polybutylene terephthalate, polyethylene naphthalate, polyether ether ketone, polyimide, polyamide, polyethylene glycol, polyamide-imide, polycarbonate, cyclic polyolefin, polyphenylene sulfide, polyvinyl acetate, polytetrafluoroethylene, polymethylene naphthalene, polyvinylidene fluoride, polyethylene naphthalate, polypropylene carbonate, poly(vinylidene fluoride-hexafluoropropylene), poly(vinylidene fluoride-co-chlorotrifluoroethylene), silicone, vinylon, polypropylene, acid anhydride modified polypropylene, polyethylene, other ethylene and copolymerthereof (for example, EVA, EEA, EAA, and EVAL), polyvinyl chloride, polystyrene, other types of polyolefins, polyether nitrile, polyurethane, polyphenylene ether, polyester, polysulfone, amorphous α-olefin copolymer, or a derivative of the foregoing substances.

The intermediate layer uses a polymer material. Because a density of the polymer material is lower than that of a commonly used metal-based current collector material, a weight of an inactive material can be reduced, thereby increasing a mass energy density of an electrode assembly. Compared with a metal-based current collector, a partition prepared when the intermediate layer uses the polymer material is less likely to generate conductive debris under mechanical abuse (nail penetration, impact, extrusion, and the like), and a mechanically damaged surface can be better wrapped. Therefore, a safety margin can be improved in the case of mechanical abuse, and a pass rate for safety testing is increased.

In an embodiment of this application, the metal material includes at least one of Ni, Ti, Ag, Au, Pt, Fe, Co, Cr, W, Mo, Pb, In, Zn, Al, Cu, or stainless steel. This application imposes no particular limitation on a type of stainless steel, provided that the stainless steel can meet a requirement of this application. For example, the stainless steel includes but is not limited to: at least one of 302 stainless steel, 304 stainless steel, 305 stainless steel, 316 stainless steel, or 317 stainless steel. Unless otherwise specified, the stainless steel in this application may refer to the 302 stainless steel. In an embodiment of this application, the second polymer material includes: polypropylene, acid anhydride modified polypropylene, polyethylene, other ethylene and copolymerthereof (for example, EVA, EEA, EAA, and EVAL), polyvinyl chloride, polystyrene, other types of polyolefins, polyether nitrile, polyurethane, polyamide, polyester, amorphous α-olefin copolymer, or a derivative of the foregoing substances.

In an embodiment of this application, a thickness of the partition is 2 µm to 500 µm, preferably, 5 µm to 50 µm, and more preferably, 5 µm to 20 µm. In an embodiment of this application, temperature at which a material of the intermediate layer starts to soften is greater than 130°C, and preferably greater than 150°C. In an embodiment of this application, temperature at which a material of the packaging layer starts to soften is 120°C to 240°C, and preferably, 130°C to 170°C. It should be noted that when the first polymer material is selected as the intermediate layer, the material of the intermediate layer of the partition prepared in this application can be the same as or different from that of the packaging layer. When the same material is used, for example, both uses PP (polypropylene), a difference between the temperature at which the intermediate layer starts to soften and the temperature at which the packaging layer starts to soften needs to be greater than 20°C, to avoid a packaging failure caused because the intermediate layer melts before the packaging layer melts when heated.

In an embodiment of this application, an interface adhesive force between the packaging layer and the intermediate layer is greater than 10 N/cm, and preferably, greater than 20 N/cm. In an embodiment of this application, an interface adhesive force between the packaging layer and outer packaging is greater than 10 N/cm, and preferably, greater than 15N/cm. In an embodiment of this application, a ratio A of a cross-sectional area of a packaging layer in an inner unsealed adhesive overflow zone to a cross-sectional area of a packaging layer in a packaging zone is 0 to 20, preferably 0.5 to 5, and more preferably, 0.5 to 2.

A method for determining the ratio A of the cross-sectional area of the packaging layer in the inner unsealed adhesive overflow zone to the cross-sectional area of the packaging layer in the packaging zone is as follows: cutting at a location in the middle of two tabs of the lithium-ion battery, selecting a cross section, and through a SEM (scanning electron microscope) test, calculating an area of an adhesive overflow zone and an area of the packaging zone in a SEM image. Areas of adhesive overflow zones and areas of the packaging zones of a plurality of lithium-ion batteries at a same location are tested in the foregoing method, to obtain areas of a plurality of adhesive overflow zones and the areas of the packaging zones, and then an average of the areas of the adhesive overflow zones and an average of the areas of the packaging zones are calculated separately. A ratio of the averages is the ratio A. FIG. 6 is a schematic cross-sectional view of a packaging zone. The packaging layer is in the middle of an aluminum-plastic film 3, and a packaging zone 5 is on the left side. Through hot-pressing by upper and lower aluminum-plastic films 3, an adhesive in the packaging zone 5 is extruded into an unsealed zone to form an adhesive overflow zone 4. When there is too much adhesive in the adhesive overflow zone, excessive bumps appear in the adhesive overflow zone, and a packaged battery is prone to be damaged; or when there is too less adhesive in the adhesive overflow zone, a heat sealing effect is not good, and a packaged battery is prone to be damaged. Therefore, a value of the ratio A should not be excessively large or small, and should be controlled within a scope in this application.

This application further provides an electrochemical apparatus, where the electrochemical apparatus includes at least one partition in this application, at least two electrode assemblies, an electrolyte, and outer packaging, and the electrode assemblies are located in a separate sealed cavity. In an embodiment of this application, the electrochemical apparatus includes at least one partition in this application, the partition is hermetically connected to outer packaging of the electrochemical apparatus, and two separate sealed cavities are formed on both sides of the partition. Each sealed cavity has an electrode assembly and an electrolyte, to form a separate electrochemical unit. The partition is of electronic conductivity, and both sides of the partition may be coated with electrode active materials with opposite polarities. Adjacent electrochemical units are internally connected in series through an electrode containing the partition in this application to form a bipolar lithium-ion battery with a higher working voltage. The partition may be selected from at least one of Ni, Ti, Ag, Au, Pt, Fe, Co, Cr, W, Mo, Pb, In, Zn, Al, Cu, or stainless steel.

In an embodiment of this application, the partition is of electronic conductivity, one tab may be extended from each of two adjacent electrode assemblies, and the tabs of the two electrode assemblies have opposite polarities. For example, when a side of the partition adjacent to the electrode assembly A is coated with a positive electrode active material and a side adjacent to the electrode assembly B is coated with a negative electrode active material, a negative tab is extended from the electrode assembly A, and a positive tab is extended from the electrode assembly B. In this case, an output voltage between the two tabs is a sum of output voltages of two electrochemical units. The partition may be selected from at least one of Ni, Ti, Ag, Au, Pt, Fe, Co, Cr, W, Mo, Pb, In, Zn, Al, Cu, or stainless steel.

In an embodiment of this application, the partition is of electronic insulation, two tabs may be extended from each of two adjacent electrode assemblies, and a positive tab of the electrode assembly A is connected in series with a negative tab of the electrode assembly B. A negative tab of the electrode assembly A and a positive tab of the electrode assembly B are output tabs, and an output voltage is a sum of the output voltages of the two electrochemical units. In an embodiment of this application, the partition is of electronic conductivity, and one tab may be extended from the partition and is configured to monitor a working status of the lithium-ion battery. In an embodiment of this application, an outermost layer of the electrode assembly includes a separator, and the separator is adjacent to the partition.

In this application, an outermost layer of the electrode assembly is finished through winding or another method, and may contain at least one of a separator or a current collector, for example, only the separator, only the current collector, or a separator in a portion and a current collector in another portion. The current collector can be in at least one of the following states: the outermost layer is not coated with an active material, the outermost layer is partially coated with the active material, or the entire surface is coated with the active material.

In an embodiment of this application, the electrochemical apparatus in this application includes at least one partition, the partition may be of electronic insulation or electronic conductivity, the partition is hermetically connected to the outer packaging, and separate sealed cavities are formed on both sides of the partition. Each sealed cavity has an electrode assembly and an electrolyte, to form an electrochemical unit. The two sides of the partition is in direct contact with a separator of an adjacent electrode assembly, to achieve electrical insulation. In this case, two tabs are extended from each of two adjacent electrode assemblies, and the two electrode assemblies are connected in series through the tabs.

In an embodiment of this application, an outermost layer of at least one electrode assembly includes a separator, and the separator is adjacent to the partition; and an outermost layer of at least one electrode assembly includes a current collector, and the current collector is adjacent to the other side of the partition.

In an embodiment of this application, the electrochemical apparatus in this application includes at least one partition, the partition is hermetically connected to the outer packaging, and separate sealed cavities are formed on both sides of the partition. Each sealed cavity has an electrode assembly and an electrolyte, to form an electrochemical unit. The partition is of electronic conductivity. One side of the partition may be coated with the electrode active material, and the other side is in contact with a separator of an electrode assembly, to achieve electrical insulation. For example, a side of the partition closer to the electrode assembly A is coated with a positive electrode active material, and a side closer to the electrode assembly B is in contact with the separator of the electrode assembly B, to achieve electrical insulation with the electrode assembly B. In this case, two tabs are extended from each of two adjacent electrode assemblies, and one tab is extended from the partition. The tab is connected to the positive tab of the electrode assembly A in parallel, and then connected to the negative tab of the electrode assembly B in series.

In an embodiment of this application, the electrochemical apparatus in this application includes at least one partition, the partition is hermetically connected to the outer packaging, and separate sealed cavities are formed on both sides of the partition. Each sealed cavity has an electrode assembly and an electrolyte, to form an electrochemical unit. The partition is of electronic insulation. One side of the partition is in contact with a separator of an electrode assembly, to achieve electrical insulation, and the other side of the partition is in direct contact with the current collector of the electrode assembly. In this case, two tabs are extended from each of two adjacent electrode assemblies, and the two electrode assemblies are connected in series through the tabs.

In an embodiment of this application, an outermost layer of the electrode assembly includes a current collector, the current collector is adjacent to the partition, and current collectors of electrode assemblies on both sides of the partition have opposite polarities, and the partition is selected from at least one of Ni, Ti, Ag, Au, Pt, Fe, Co, Cr, W, Mo, Pb, In, Zn, or stainless steel.

In an embodiment of this application, the electrochemical apparatus in this application includes at least one partition, the partition is of electronic conductivity, the partition is hermetically connected to the outer packaging, and separate sealed cavities are formed on both sides of the partition. Each sealed cavity has an electrode assembly and an electrolyte, to form an electrochemical unit. One side of the partition is coated with the electrode active material, and the other side is in direct contact with and electrically connected to the current collector of the electrode assembly. For example, a side of the partition closer to the electrode assembly A is coated with a positive electrode active material, and a side closer to the electrode assembly B is in direct contact with and electrically connected to a negative electrode current collector of the electrode assembly B. In this case, a negative tab may be extended from the electrode assembly A, a positive tab may be extended from the electrode assembly B, and the two electrochemical units are internally connected in series through the partition. Alternatively, two tabs are extended from each of the electrode assemblies A and B, a positive tab of the electrode assembly A is connected to a negative tab of the electrode assembly B in series, and the two electrochemical units are internally connected in series through the partition and externally connected in series through the tabs. In addition, one tab may be extended from the partition and is configured to monitor a working status of the battery. The partition may be selected from at least one of Ni, Ti, Ag, Au, Pt, Fe, Co, Cr, W, Mo, Pb, In, Zn, Al, Cu, or stainless steel.

In an embodiment of this application, the partition is of electronic insulation, an outermost layer of the electrode assembly includes a current collector, and the current collector is adjacent to the partition. In an embodiment of this application, the electrochemical apparatus in this application includes at least one partition, the partition is hermetically connected to the outer packaging, and separate sealed cavities are formed on both sides of the partition. Each sealed cavity has an electrode assembly and an electrolyte, to form an electrochemical unit. The partition is of electronic insulation, the two sides of the partition are in direct contact with an outermost current collector of an adjacent electrode assembly, to achieve electrical insulation. In this case, two tabs are extended from each of two adjacent electrode assemblies, and the two electrode assemblies are connected in series through the tabs.

In an embodiment of this application, the partition is of electronic conductivity, and there may be a primer layer between the partition and the electrode active material, and the primer layer is used to improve adhesion performance between the partition and the active material, and can improve the electronic conductivity between the partition and the active material. The primer layer is usually obtained by applying, on the partition, a slurry formed by mixing conductive carbon black, styrene-butadiene rubber, and deionized water, and then drying, and primer layers on both faces of the partition may be the same or different. The partition may be selected from at least one of Ni, Ti, Ag, Au, Pt, Fe, Co, Cr, W, Mo, Pb, In, Zn, Al, Cu, or stainless steel.

This application further provides an electronic apparatus, and the electronic apparatus includes the electrochemical apparatus according to any one of the foregoing embodiments. The electrode assembly in this application is not particularly limited, and any electrode assembly in the prior art can be used provided that the purpose of this application can be achieved. For example, a laminated electrode assembly or a wound electrode assembly can be used. The electrode assembly generally includes a positive electrode plate, a negative electrode plate, and a separator.

The negative electrode plate in this application is not particularly limited, provided that the purpose of this application can be achieved. For example, the negative electrode plate usually includes a negative electrode current collector and a negative electrode active material layer. The negative electrode current collector is not particularly limited, and any negative electrode current collector known in the art can be used, such as copper foil, aluminum foil, aluminum alloy foil, and a composite current collector. The negative electrode active material layer includes a negative electrode active material. The negative electrode active material is not particularly limited, and any negative electrode active material known in the art can be used. For example, the negative electrode active material may include at least one of artificial graphite, natural graphite, carbonaceous mesophase spherule, soft carbon, hard carbon, silicon, silicon carbon, lithium titanate, or the like.

The positive electrode plate in this application is not particularly limited, provided that the purpose of this application can be achieved. For example, the positive electrode plate usually includes a positive electrode current collector and a positive electrode active material. The positive electrode current collector is not particularly limited, and may be any positive electrode current collector known in the art, such as aluminum foil, aluminum alloy foil, or a composite current collector. The positive electrode active material is not particularly limited, and can be any positive electrode active material in the prior art. The active material includes at least one of NCM811, NCM622, NCM523, NCM111, NCA, lithium iron phosphate, lithium cobalt oxide, lithium manganate oxide, lithium manganese iron phosphate, or lithium titanate.

The electrolyte in this application is not particularly limited, and any electrolyte known in the art can be used, for example, an electrolyte in any one of a gel state, a solid state, and a liquid state. For example, a liquid electrolyte solution may include lithium salt and a non-aqueous solvent. The lithium salt is not particularly limited, and any lithium salt known in the art can be used provided that the purpose of this application can be achieved. For example, the lithium salt may include at least one of lithium hexafluorophosphate (LiPF6), lithium tetrafluoroborate (LiBF4), lithium difluorophosphate (LiPO₂F₂), lithium bis(fluorosulfonyl)imide LiN(CF₃SO₂)₂(LiTFSI), lithium bis(fluorosulfonyl)imide Li(N(SO₂F)₂)(LiFSI), lithium bis(oxalate)borate LiB(C₂O₄)₂(LiBOB), or lithium difluoro(oxalato)borate LiBF₂(C₂O₄)(LiDFOB). For example, LiPF6 can be used as the lithium salt. The non-aqueous solvent is not particularly limited, provided that the purpose of this application can be achieved. For example, the non-aqueous solvent may include at least one of a carbonate compound, a carboxylate compound, an ether compound, a nitrile compound, or another organic solvent. For example, the carbonate compound may include at least one of diethyl carbonate (DEC), dimethyl carbonate (DMC), ethyl methyl carbonate (EMC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), vinyl ethylene carbonate (VEC), fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, or trifluoromethylethylene carbonate.

The separator in this application is not particularly limited. For example, the separator includes a polymer or an inorganic substance formed by a material stable to the electrolyte of this application. The separator generally needs to be of ion conductivity and electronic insulation. For example, the separator may include a substrate layer and a surface treatment layer. The substrate layer may be a non-woven fabric, membrane, or composite membrane having a porous structure, and a material of the substrate layer may be selected from at least one of polyethylene, polypropylene, polyethylene terephthalate, or polyimide. Optionally, a polypropylene porous membrane, a polyethylene porous membrane, polypropylene nonwoven fabric, polyethylene nonwoven fabric, or a polypropylene-polyethylene-polypropylene porous composite membrane can be used. Optionally, the surface treatment layer is provided on at least one surface of the substrate layer, and the surface treatment layer may be a polymer layer or an inorganic layer, or may be a layer formed by mixing the polymer and the inorganic substance. For example, the inorganic layer includes inorganic particles and a binder. The inorganic particles are not particularly limited, and may be selected from, for example, at least one of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is not particularly limited, and may be selected from, for example, a combination of one or more of polyvinylidene fluoride, vinylidene fluoride-hexafluoropropylene copolymer, polyamide, polyacrylonitrile, polyacrylate, polyacrylic acid, polyacrylate, polyvinylpyrrolidone, polyvinyl ether, polymethyl methacrylate, polytetrafluoroethylene, and polyhexafluoropropylene. The polymer layer includes a polymer, and a material of the polymer includes at least one of polyamide, polyacrylonitrile, acrylate polymer, polyacrylic acid, polyacrylate, polyvinylpyrrolidone, polyvinyl ether, polyvinylidene fluoride, or poly(vinylidene fluoride-hexafluoropropylene).

This application further provides a method for preparing a partition, to prepare a partition of which the entire intermediate layer is coated with the packaging layer. The method includes the following steps: (1) Evenly disperse a packaging layer material into a dispersant, to prepare a suspension of the packaging layer. (2) Perform casting on both sides of the intermediate layer by using a casting device, to obtain the suspension and prepare the packaging layer. (3) Dry the dispersant in the suspension of the packaging layer, to complete preparation of the partition.

This application further provides a method for preparing a partition, to prepare a partition of which the entire intermediate layer is coated with the packaging layer. The method includes the following steps: (1) Evenly disperse a packaging layer material into a dispersant, to prepare a suspension of the packaging layer. (2) Evenly disperse an intermediate layer material into a dispersant, to prepare a suspension of the intermediate layer. (3) Simultaneously perform casting on the suspension of the intermediate layer and the suspension of the packaging layer on both sides by using a casting device. (4) Dry the dispersant in the suspension of the packaging layer and the suspension of the intermediate layer, to complete preparation of the partition.

This application further provides a method for preparing a partition, to prepare a partition of which peripheral edges of the intermediate layer are coated with the packaging layer, and includes the following steps: (1) Evenly disperse a packaging layer material into a dispersant, to prepare a suspension of the packaging layer. (2) Separately prepare packaging layers on both sides of the intermediate layer by using a spreading machine. (3) Dry the dispersant in the suspension of the packaging layer, to complete preparation of the partition.

This application further provides a method for preparing a partition, to prepare a partition of which peripheral edges of the intermediate layer are coated with the packaging layer. The method includes the following steps: (1) Evenly disperse a packaging layer material into a dispersant, to prepare a suspension of the packaging layer. (2) Separately prepare packaging layers on both sides of the intermediate layer by using a 3D printer. (3) Dry the dispersant in the suspension of the packaging layer, to complete preparation of the partition.

This application further provides a method for preparing a partition, to prepare a partition of which peripheral edges of the intermediate layer are coated with the packaging layer, the intermediate layer has a dual-layer composite structure, including a metal/metal composite structure, and a metal/polymer composite structure. The preparation method includes the following steps: (1) Evenly disperse a packaging layer material into a dispersant, to prepare a suspension of the packaging layer. (2) Separately prepare a packaging layer on both sides of the intermediate layer with the dual-layer composite structure by using a spreading machine. (3) Dry the dispersant in the suspension of the packaging layer, to complete preparation of the partition.

This application further provides a method for preparing a partition, to prepare a partition of which peripheral edges of the intermediate layer are coated with the packaging layer, the intermediate layer has a triple-layer composite structure, including a metal/metal/metal composite structure, and a polymer/metal/polymer composite structure. The preparation method includes the following steps: (1) Evenly disperse a packaging layer material into a dispersant, to prepare a suspension of the packaging layer. (2) Separately prepare a packaging layer on both sides of the intermediate layer with the triple-layer composite structure by using a 3D printer. (3) Dry the dispersant in the suspension of the packaging layer, to complete preparation of the partition.

This application imposes no particular limitation on the dispersant, and the dispersant can be a polar organic solvent commonly used in the field, for example, NMP (N-methylpyrrolidone), DMF (N,N-dimethylformamide), and THF (tetrahydrofuran).

The following uses examples and comparative examples to describe the embodiments of this application more specifically. Various tests and evaluations were performed in the following methods. In addition, unless otherwise specified, "percentage" and "%" are based on weight.

### Examples

Preparation Example 1: Preparation of a negative electrode plate: Negative electrode active materials of graphite, conductive carbon black, and styrene-butadiene rubber were mixed in a mass ratio of 96:1.5:2.5, and deionized water was added as a solvent to prepare a slurry with a solid content of 70% and was mixed evenly. The slurry was evenly applied on a surface of copper foil with a thickness of 10 µm, and dried at 110°C, to obtain a negative electrode plate with a coating thickness of 150 µm, having one face coated with a negative electrode active material layer, and then the foregoing coating step was repeated on the other face of the negative electrode plate. After the coating was completed, the electrode plate was cut into a size of 41 mm×61 mm and a tab was welded thereon for use.

Preparation Example 2: Preparation of a positive electrode plate: Positive electrode active materials of LiCoO₂, conductive carbon black, and PVDF (polyvinylidene fluoride) were mixed in a mass ratio of 97.5:1.0:1.5, and NMP was added as a solvent to prepare a slurry with a solid percentage of 75% and was mixed evenly. The slurry was evenly applied on a surface of aluminum foil with a thickness of 12 µm, and dried at 90°C, to obtain a positive electrode plate with a coating thickness of 100 µm, having one face coated with a positive electrode active material layer. Then, the foregoing step was repeated on the other face of the positive electrode plate. After the coating was completed, the electrode plate was cut into a size of 38 mm×58 mm and a tab was welded thereon for use.

Preparation Example 3: Preparation of an electrolyte: In an atmosphere of dry argon, first, organic solvents EC (ethylene carbonate), EMC (ethyl methyl carbonate), and DEC (diethyl carbonate) were mixed in a mass ratio of EC:EMC:DEC = 30:50:20, and then LiPF6 (lithium hexafluorophosphate) was added to the organic solvent for dissolution and mixed evenly, to obtain an electrolyte with a lithium salt concentration of 1.15 M (mol/L).

Preparation Example 4: Preparation of an electrode assembly: A PE (polyethylene) film with a thickness of 15 µm was selected as a separator, and one positive electrode plate in Preparation Example 2 was placed on both faces of the negative electrode plate in Preparation Example 1, a layer of separator was placed between the positive electrode plate and the negative electrode plate, to form a laminated plate, four corners of an entire laminated structure were fastened, and a positive tab and a negative tab were extended, to obtain an electrode assembly A. A PE film with a thickness of 15 µm was selected as a separator, and one negative electrode plate was placed on both faces of the positive electrode plate, a layer of separator was placed between the positive electrode plate and the negative electrode plate, to form a laminated plate, four corners of an entire laminated structure were fastened, and a positive tab and a negative tab were extended, to obtain an electrode assembly B.

**Example** 1 Preparation of a partition: (1) A packaging substance of PP in a packaging layer was evenly dispersed into a dispersant of NMP (N-methylpyrrolidone) to obtain a suspension of the packaging layer, where a concentration of the suspension was 45 wt%. (2) A packaging layer of PP with a thickness of 40 µm was prepared on peripheral edges of two surfaces of an intermediate layer of a PET (polyethylene terephthalate) film with a thickness of 20 µm by using a spreading machine, where a width of the packaging layer of PP was 5 mm, temperature at which the intermediate layer of PET started to soften was 270°C, temperature at which the packaging layer of PP started to soften was 150°C, and a thickness compression rate of the packaging layer was 70%. (3) The dispersant of NMP in the suspension of the packaging layer was dried at 130°C, to complete preparation of the partition. A thickness compression rate of a packaging layer of each embodiment was adjusted by adjusting parameters such as packaging time, packaging pressure, and packaging temperature. For details, refer to Table 1.

Assembling of an electrode assembly: A packaging film (aluminum-plastic film) with a thickness of 90 µm that was obtained through recess-punching was placed in assembly clamping with a recess facing upward, then the electrode assembly A in Preparation Example 4 was placed in the recess, then a partition was placed on the electrode assembly A, so that a side of the partition was in contact with the separator of the electrode assembly A, and external force was applied for tight compression. The semi-finished assembly was placed in other assembly clamping, the electrode assembly B in Preparation Example 4 was placed on the partition, the other side of the partition was in contact with the separator of the electrode assembly B, then another aluminum-plastic film with a thickness of 90 µm that was obtained through the recess-punching was placed to cover the electrode assembly B with a recess facing downward, and then the two aluminum-plastic films and the partition were heat-sealed together through hot pressing, so that the electrode assembly A and the electrode assembly B were separated by the partition, to obtain the assembled electrode assembly. The assembled electrode assembly had two separate cavities, the electrode assembly A was corresponding to a first cavity, and the electrode assembly B was corresponding to a second cavity.

Injection and packaging of the electrode assembly: The electrolyte in Preparation Example 3 was respectively injected into the two cavities of the assembled electrode assembly and then packaged, tabs of the two electrode assemblies were extended out of outer packaging, and a positive tab of the electrode assembly A and a negative tab of the electrode assembly B were welded together, to implement a serial connection between the two electrode assemblies.

**Example** 2 All was the same as that in Example 1, except that a thickness compression rate of a packaging layer was 40% during preparation of a partition.

**Example** 3 All was the same as that in Example 1, except that a thickness compression rate of a packaging layer was 20% during preparation of a partition.

**Example** 4 All was the same as that in Example 1, except that PP was used as a packaging layer material, PP was used as an intermediate layer material, temperature at which the packaging layer started to soften was 130°C, temperature at which the intermediate layer started to soften was 150°C, and a thickness compression rate of the packaging layer was 40% during preparation of a partition.

**Example** 5 All was the same as that in Example 1, except that PI (polyimide) was used as an intermediate layer material, temperature at which the intermediate layer started to soften was 334°C, and a thickness compression rate of the packaging layer was 40% during preparation of a partition.

**Example** 6 All was the same as that in Example 1, except that PS (polystyrene) was used as a packaging layer material, stainless steel was used as an intermediate layer material, temperature at which the packaging layer started to soften was 240°C, temperature at which the intermediate layer started to soften was 1440°C, and a thickness compression rate of the packaging layer was 40% during preparation of a partition.

**Example** 7 All was the same as that in Example 1, except that PI was used as an intermediate layer material, temperature at which the intermediate layer started to soften was 334°C, a thickness compression rate of a packaging layer was 40%, an interface adhesion force between the packaging layer and the intermediate layer was 28 N/m, and an interface adhesion force between the packaging layer and outer packaging was 17.3 N/m during preparation of a partition.

**Example** 8 All was the same as that in Example 1, except that PS was used as a packaging layer material, PI was used as an intermediate layer material, temperature at which the packaging layer started to soften was 240°C, temperature at which the intermediate layer material started to soften was 334°C, and a thickness compression rate of the packaging layer was 40% during preparation of a partition.

**Example** 9 All was the same as that in Example 1, except that PI was used as an intermediate layer material, temperature at which the intermediate layer material started to soften was 334°C, and a ratio A was 0 during preparation of a partition.

**Example 10** All was the same as that in Example 1, except that PI was used as an intermediate layer material, temperature at which the intermediate layer material started to soften was 334°C, and a ratio A was 0.1 during preparation of a partition.

**Example 11** All was the same as that in Example 1, except that PI was used as an intermediate layer material, temperature at which the intermediate layer material started to soften was 334°C, a thickness compression rate of a packaging layer was 40%, and a ratio A was 1.5 during preparation of a partition.

**Example 12** All was the same as that in Example 1, except that PI was used as an intermediate layer material, temperature at which the intermediate layer material started to soften was 334°C, a thickness compression rate of a packaging layer was 20%, and a ratio A was 20 during preparation of a partition. In Examples 9 to 12, a value of the ratio A was adjusted by adjusting a glue width of a glue coated zone of the packaging. A smaller glue width indicated a smaller value of A.

**Example 13** All was the same as that in Example 1, except that Al was used as an intermediate layer material, temperature at which the packaging layer material started to soften was 130°C, temperature at which the intermediate layer material started to soften was 660°C, and a thickness compression rate of the packaging layer was 40% during preparation of a partition.

**Example 14** All was the same as that in Example 1, except that a carbon film was used as an intermediate layer material, temperature at which the intermediate layer started to soften was 3500°C, and a thickness compression rate of the packaging layer was 40% during preparation of a partition.

**Example 15** All was the same as that in Example 1, except that PI was used as an intermediate layer material, temperature at which the intermediate layer material started to soften was 334°C, a thickness compression rate of a packaging layer was 40%, and a thickness of the intermediate layer was 400 µm during preparation of a partition.

**Example 16** All was the same as that in Example 1, except that PI was used as an intermediate layer material, temperature at which the intermediate layer material started to soften was 334°C, a thickness compression rate of a packaging layer was 40%, and a thickness of the intermediate layer was 10 µm during preparation of a partition.

**Example 17** All was the same as that in Example 1, except that PI was used as an intermediate layer material, temperature at which the intermediate layer material started to soften was 334°C, a thickness compression rate of a packaging layer was 40%, and a thickness of the intermediate layer was 2 µm during preparation of a partition.

**Example 18** During preparation of a partition, PI was used as an intermediate layer material, temperature at which the intermediate layer material started to soften was 334°C, and a thickness compression rate of the packaging layer was 40%. During assembling of an electrode assembly, a packaging film (aluminum-plastic film) with a thickness of 90 µm that was obtained through recess-punching was placed in assembly clamping with a recess facing upward, then the electrode assembly A in Preparation Example 4 was placed in the recess, then a partition was placed on the electrode assembly A, so that a side of the partition was in contact with the separator of the electrode assembly A, and external force was applied for tight compression. The semi-finished assembly was placed in other assembly clamping, the electrode assembly B in Preparation Example 4 was placed on the partition, the other side of the partition was in contact with the current collector of the electrode assembly B, then another aluminum-plastic film with a thickness of 90 µm that was obtained through the recess-punching was placed to cover the electrode assembly B with a recess facing downward, and then the two aluminum-plastic films and the partition were heat-sealed together through hot pressing, so that the electrode assembly A and the electrode assembly B were separated by the partition, to obtain the assembled electrode assembly. The assembled electrode assembly had two separate cavities, the electrode assembly A was corresponding to a first cavity, and the electrode assembly B was corresponding to a second cavity. The remaining processes other than those described above were the same as that in Example 1.

**Example 19** During preparation of a partition, an intermediate layer material was stainless steel, a melting point of an intermediate layer was 1440°C, a thickness compression rate of a packaging layer was 40%. During assembling of an electrode assembly, a packaging film (aluminum-plastic film) with a thickness of 90 µm that was obtained through recess-punching was placed in assembly clamping with a recess facing upward, then the electrode assembly A in Preparation Example 4 was placed in the recess, so that a positive electrode plate in the electrode assembly A faced upward, then a partition was placed on the electrode assembly A, so that a side of the partition was in contact with a positive electrode current collector of the electrode assembly A, and external force was applied for tight compression. The semi-finished assembly was placed in assembly clamping, the partition faced upward, the electrode assembly B in Preparation Example 4 was placed on the partition with a negative electrode facing downward, the other side of the partition was in contact with a negative electrode current collector of the electrode assembly B, then another aluminum-plastic film with a thickness of 90 µm that was obtained through the recess-punching was placed to cover the electrode assembly B with a recess facing downward, and then the two aluminum-plastic films and the partition were heat-sealed together through hot pressing, so that the electrode assembly A and the electrode assembly B were separated by the partition, to obtain the assembled electrode assembly. The assembled electrode assembly had two separate cavities, the electrode assembly A was corresponding to a first cavity, and the electrode assembly B was corresponding to a second cavity. Injection and packaging of the electrode assembly: The electrolyte in Preparation Example 3 was respectively injected into the two cavities of the assembled electrode assembly and then packaged, tabs of the electrode assemblies A and B were extended out of outer packaging, and two electrochemical units were internally connected in series through the partition, to obtain a lithium-ion battery. The remaining processes other than those described above were the same as that in Example 1.

**Example 20** During preparation of a partition, an intermediate layer material was PI, temperature at which the intermediate layer material started to soften was 334°C, a thickness compression rate of a packaging layer was 40%; and during assembling of an electrode assembly, a packaging film (aluminum-plastic film) with a thickness of 90 µm that was obtained through recess-punching was placed in assembly clamping with a recess facing upward, then the electrode assembly A in Preparation Example 4 was placed in the recess, then a partition was placed on the electrode assembly A, so that a side of the partition was in contact with the current collector of the electrode assembly A, and external force was applied for tight compression. The semi-finished assembly was placed in other assembly clamping, the electrode assembly B in Preparation Example 4 was placed on the partition, the other side of the partition was in contact with the current collector of the electrode assembly B, then another aluminum-plastic film with a thickness of 90 µm that was obtained through the recess-punching was placed to cover the electrode assembly B with a recess facing downward, and then the two aluminum-plastic films and the partition were heat-sealed together through hot pressing, so that the electrode assembly A and the electrode assembly B were separated by the partition, to obtain the assembled electrode assembly. The assembled electrode assembly had two separate cavities, the electrode assembly A was corresponding to a first cavity, and the electrode assembly B was corresponding to a second cavity. The remaining processes other than those described above were the same as that in Example 1.

**Example 21** During preparation of a partition, an intermediate layer material was PI, temperature at which the intermediate layer material started to soften was 334°C, a thickness compression rate of a packaging layer was 40%, and two sides of the intermediate layer, that is, two surfaces, were both coated with PP. Steps of preparing a partition were as follows: (1) A packaging substance of PP in a packaging layer was evenly dispersed into a dispersant of NMP (N-methylpyrrolidone) to obtain a prepared suspension of the packaging layer, where a concentration of the suspension was 45 wt%. (2) A packaging layer of PP with a thickness of 30 µm was evenly prepared on two sides of an intermediate layer of a PI (polyimide) film with a thickness of 20 µm by using a spreading machine, where temperature at which the intermediate layer of PI started to soften was 334°C, and temperature at which the packaging layer of PP started to soften was 150°C. (3) A dispersant of NMP in a suspension of the packaging layer was dried at 130°C, to complete the preparation of the partition. The remaining processes other than those described above were the same as that in Example 1.

**Example 22** During preparation of a partition, an intermediate layer material was PI, temperature at which the intermediate layer material started to soften was 334°C, a thickness compression rate of a packaging layer was 40%, and two sides of the intermediate layer were both coated with PP. Steps of preparing a partition were as follows: (1) A packaging substance of PP in a packaging layer was evenly dispersed into a dispersant of NMP (N-methylpyrrolidone) to obtain a prepared suspension of the packaging layer, where a concentration of the suspension was 45 wt%. (2) A packaging layer of PP with a thickness of 30 µm was evenly prepared on two sides of an intermediate layer of a PI (polyimide) film with a thickness of 20 µm by using a spreading machine, where temperature at which the intermediate layer of PI started to soften was 334°C, and temperature at which the packaging layer of PP started to soften was 150°C. (3) A dispersant of NMP in a suspension of the packaging layer was dried at 130°C, to complete the preparation of the partition. Assembling of an electrode assembly: A packaging film (aluminum-plastic film) with a thickness of 90 µm that was obtained through recess-punching was placed in assembly clamping with a recess facing upward, then the electrode assembly A in Preparation Example 4 was placed in the recess, then a partition was placed on the electrode assembly A, so that a side of the partition was in contact with the separator of the electrode assembly A, and external force was applied for tight compression. The semi-finished assembly was placed in other assembly clamping, the electrode assembly B in Preparation Example 4 was placed on the partition, the other side of the partition was in contact with the current collector of the electrode assembly B, then another aluminum-plastic film with a thickness of 90 µm that was obtained through the recess-punching was placed to cover the electrode assembly B with a recess facing downward, and then the two aluminum-plastic films and the partition were heat-sealed together through hot pressing, so that the electrode assembly A and the electrode assembly B were separated by the partition, to obtain the assembled electrode assembly. The assembled electrode assembly had two separate cavities, the electrode assembly A was corresponding to a first cavity, and the electrode assembly B was corresponding to a second cavity. The remaining processes other than those described above were the same as that in Example 1.

**Example 23** During preparation of a partition, an intermediate layer material was PI, temperature at which the intermediate layer material started to soften was 334°C, a thickness compression rate of a packaging layer was 40%, and two sides of the intermediate layer were both coated with PP. Steps of preparing a partition were as follows: (1) A packaging substance of PP in a packaging layer was evenly dispersed into a dispersant of NMP (N-methylpyrrolidone) to obtain a prepared suspension of the packaging layer, where a concentration of the suspension was 45 wt%. (2) A packaging layer of PP with a thickness of 30 µm was evenly prepared on two sides of an intermediate layer of a PI (polyimide) film with a thickness of 20 µm by using a spreading machine, where temperature at which the intermediate layer of PI started to soften was 334°C, and temperature at which the packaging layer of PP started to soften was 150°C. (3) A dispersant of NMP in a suspension of the packaging layer was dried at 130°C, to complete the preparation of the partition. Assembling of an electrode assembly: A packaging film (aluminum-plastic film) with a thickness of 90 µm that was obtained through recess-punching was placed in assembly clamping with a recess facing upward, then the electrode assembly A in Preparation Example 4 was placed in the recess, then a partition was placed on the electrode assembly A, so that a side of the partition was in contact with the current collector of the electrode assembly A, and external force was applied for tight compression. The semi-finished assembly was placed in other assembly clamping, the electrode assembly B in Preparation Example 4 was placed on the partition, then another aluminum-plastic film with a thickness of 90 µm that was obtained through the recess-punching was placed to cover the electrode assembly B with a recess facing downward, the other side of the partition was in contact with the current collector of the electrode assembly B, and then the two aluminum-plastic films and the partition were heat-sealed together through hot pressing, so that the electrode assembly A and the electrode assembly B were separated by the partition, to obtain the assembled electrode assembly. The assembled electrode assembly had two separate cavities, the electrode assembly A was corresponding to a first cavity, and the electrode assembly B was corresponding to a second cavity. The remaining processes other than those described above were the same as that in Example 1.

**Example 24** During preparation of a partition, an intermediate layer material was stainless steel, a melting point was 1140°C, and a thickness compression rate of a packaging layer was 40%. Assembling of an electrode assembly: A packaging film (aluminum-plastic film) with a thickness of 90 µm that was obtained through recess-punching was placed in assembly clamping with a recess facing upward, then the electrode assembly A in Preparation Example 4 was placed in the recess, then a partition was placed on the electrode assembly A, so that a side of the partition was in contact with the separator of the electrode assembly A, and external force was applied for tight compression. The semi-finished assembly was placed in other assembly clamping, the electrode assembly B in Preparation Example 4 was placed on the partition, the other side of the partition came into contact with the positive electrode current collector of the electrode assembly B, then another aluminum-plastic film with a thickness of 90 µm that was obtained through the recess-punching was placed to cover the electrode assembly B with a recess facing downward, and then the two aluminum-plastic films and the partition were heat-sealed together through hot pressing, so that the electrode assembly A and the electrode assembly B were separated by the partition, to obtain the assembled electrode assembly. The assembled electrode assembly had two separate cavities, the electrode assembly A was corresponding to a first cavity, and the electrode assembly B was corresponding to a second cavity. Injection and packaging of the electrode assembly: The electrolyte in Preparation Example 3 was respectively injected into the two cavities of the assembled electrode assembly and then packaged, tabs of the two electrode assemblies were extended out of outer packaging, and a positive tab of the electrode assembly A and a negative tab of the electrode assembly B were welded together, to implement a serial connection between the two electrode assemblies. The remaining processes other than those described above were the same as that in Example 1.

**Example 25** During preparation of a partition, a thickness compression rate of the packaging layer was 40%. During preparation of an electrode assembly, a negative electrode plate with two coated faces, a first separator, a positive electrode plate with two coated faces, and a second separator were sequentially laminated to form a laminated plate, and then the entire laminated plate was wound, a positive tab and a negative tab were extended outside, and the first separator was placed on an outermost side. A polyethylene (PE) film with a thickness of 15 µm was selected as the separator, the negative electrode plate was prepared through Preparation Example 1, and the positive electrode plate was prepared through Preparation Example 2. An electrode assembly A was prepared. A negative electrode plate with two coated faces, a first separator, a positive electrode plate with two coated faces, and a second separator were sequentially laminated to form a laminated plate, and then the entire laminated plate was wound, a positive tab and a negative tab were extended outside, the second separator was placed on an outermost side, the negative electrode plate was prepared through Preparation Example 1, and the positive electrode plate was prepared through Preparation Example 2. A polyethylene (PE) film with a thickness of 15 µm was selected as the separator. An electrode assembly B was prepared. The remaining processes other than those described above were the same as that in Example 1.

**Example 26** During preparation of a partition, an intermediate layer material was stainless steel, a melting point was 1140°C, a thickness compression rate of a packaging layer was 40%. During preparation of an electrode assembly, a negative electrode plate with two coated faces, a first separator, a positive electrode plate with two coated faces, and a second separator were sequentially laminated to form a laminated plate, then the entire laminated plate was wound, a positive tab and a negative tab were extended outside, and the first separator was placed on an outermost side. A polyethylene (PE) film with a thickness of 15 µm was selected as the separator, the negative electrode plate was prepared through Preparation Example 1, and the positive electrode plate was prepared through Preparation Example 2. An electrode assembly A was prepared. A negative electrode plate with two coated faces, a first separator, a positive electrode plate with two coated faces, and a second separator were sequentially laminated to form a laminated plate, then the entire laminated plate was wound, a positive tab and a negative tab were extended outside, and a positive electrode current collector of the positive electrode plate was placed on an outermost side. A polyethylene (PE) film with a thickness of 15 µm was selected as the separator, the negative electrode plate was prepared through Preparation Example 1, and the positive electrode plate was prepared through Preparation Example 2. An electrode assembly B was prepared. Assembling of an electrode assembly: A packaging film (aluminum-plastic film) with a thickness of 90 µm that was obtained through recess-punching was placed in assembly clamping with a recess facing upward, then the electrode assembly A was placed in the recess, then a partition was placed on the electrode assembly A, so that a side of the partition was in contact with the first separator of the electrode assembly A, and external force was applied for tight compression. The semi-finished assembly was placed in other assembly clamping, the electrode assembly B was placed on the partition, the other side of the partition was in contact with the positive electrode current collector of the electrode assembly B, then another aluminum-plastic film with a thickness of 90 µm that was obtained through the recess-punching was placed to cover the electrode assembly B with a recess facing downward, and then the two aluminum-plastic films and the partition were heat-sealed together through hot pressing, so that the electrode assembly A and the electrode assembly B were separated by the partition, to obtain the assembled electrode assembly. The assembled electrode assembly had two separate cavities, the electrode assembly A was corresponding to a first cavity, and the electrode assembly B was corresponding to a second cavity. Injection and packaging of the electrode assembly: The electrolyte in Preparation Example 3 was respectively injected into the two cavities of the assembled electrode assembly and then packaged, tabs of the two electrode assemblies were extended out of outer packaging, and a positive tab of the electrode assembly A and a negative tab of the electrode assembly B were welded together, to implement a serial connection between the two electrode assemblies. The remaining processes other than those described above were the same as that in Example 1.

**Example 27** During preparation of a partition, an intermediate layer material was stainless steel, a melting point was 1440°C, a thickness compression rate of a packaging layer was 40%. During preparation of an electrode assembly, a negative electrode plate with two coated faces, a separator, and a positive electrode plate with two coated faces were sequentially laminated to form a laminated plate, then the entire laminated plate was wound, a positive tab and a negative tab were extended outside, and a negative electrode current collector of the negative electrode plate was placed on an outermost side. A polyethylene (PE) film with a thickness of 15 µm was selected as the separator, the negative electrode plate was prepared through Preparation Example 1, and the positive electrode plate was prepared through Preparation Example 2. An electrode assembly A was prepared. A negative electrode plate with two coated faces, a separator, and a positive electrode plate with two coated faces were sequentially laminated to form a laminated plate, then the entire laminated plate was wound, a positive tab and a negative tab were extended outside, and a positive electrode current collector of the positive electrode plate was placed on an outermost side. A polyethylene (PE) film with a thickness of 15 µm was selected as the separator, the negative electrode plate was prepared through Preparation Example 1, and the positive electrode plate was prepared through Preparation Example 2. An electrode assembly B was prepared. Assembling of an electrode assembly: A packaging film (aluminum-plastic film) with a thickness of 90 µm that was obtained through recess-punching was placed in assembly clamping with a recess facing upward, then the electrode assembly A was placed in the recess, so that a positive electrode plate of the electrode assembly A faced upward, then a partition was placed on the electrode assembly A, so that a side of the partition was in contact with the negative electrode current collector of the electrode assembly A, and external force was applied for tight compression. The semi-finished assembly was placed in other assembly clamping, the partition faced upward, the electrode assembly B was placed on the partition with a negative electrode facing downward, the other side of the partition was in contact with the positive electrode current collector of the electrode assembly B, then another aluminum-plastic film with a thickness of 90 µm that was obtained through the recess-punching was placed to cover the electrode assembly B with a recess facing downward, and then the two aluminum-plastic films and the partition were heat-sealed together through hot pressing, so that the electrode assembly A and the electrode assembly B were separated by the partition, to obtain the assembled electrode assembly. The assembled electrode assembly had two separate cavities, the electrode assembly A was corresponding to a first cavity, and the electrode assembly B was corresponding to a second cavity. Injection and packaging of the electrode assembly: The electrolyte in Preparation Example 3 was respectively injected into the two cavities of the assembled electrode assembly and then packaged, tabs of the electrode assemblies A and B were extended out of outer packaging, and two electrochemical units were internally connected in series through the partition, to obtain a lithium-ion battery. The remaining processes other than those described above were the same as that in Example 1.

**Example 28** All was the same as that in Example 1, except that 302 stainless steel was used as an intermediate layer material, a thickness of an intermediate layer was 6 µm, a single-layer thickness of a packaging layer was 7 µm, so that a thickness of the partition was 20 µm, and temperature at which the intermediate layer started to soften was 1440°C during preparation of a partition.

**Example 29** All was the same as that in Example 28, except that a thickness compression rate of a packaging layer was 40% during preparation of a partition. **Example 30** All was the same as that in Example 28, except that a thickness compression rate of a packaging layer was 20% during preparation of a partition. **Example 31** All was the same as that in Example 29, except that temperature at which a packaging layer material started to soften was 140°C during preparation of a partition. **Example 32** All was the same as that in Example 28, except that a ratio A was 0 during preparation of a partition. **Example 33** All was the same as that in Example 28, except that a ratio A was 0.1 during preparation of a partition. **Example 34** All was the same as that in Example 28, except that a ratio A was 1.5 and a thickness compression rate of a packaging layer was 40% during preparation of a partition.

**Example 35** All was the same as that in Example 28, except that a ratio A was 20 and a thickness compression rate of a packaging layer was 20% during preparation of a partition. In Examples 30 to 33, a value of a ratio A was adjusted by adjusting a glue width of a glue coated zone of the packaging. A smaller glue width indicated a smaller value of A.

**Example 36** All was the same as that in Example 29, except that 304 stainless steel was used as an intermediate layer material and temperature at which an intermediate layer started to soften was 1410°C during preparation of a partition.

**Example 37** All was the same as that in Example 29, except that 316 stainless steel was used as an intermediate layer material and temperature at which an intermediate layer started to soften was 1420°C during preparation of a partition.

**Example 38** All was the same as that in Example 29, except that PET was used as an intermediate layer material and temperature at which an intermediate layer started to soften was 270°C during preparation of a partition.

**Example 39** All was the same as that in Example 29, except that Cu was used as an intermediate layer material, temperature at which an intermediate layer started to soften was 1080°C, and temperature at which a packaging layer started to soften was 130°C during preparation of a partition.

**Example 40** All was the same as that in Example 29, except that Al was used as an intermediate layer material, a thickness of an intermediate layer was 100 µm, a single-layer thickness of a packaging layer was 200 µm, so that a thickness of the partition was 500 µm, and temperature at which the intermediate layer material started to soften was 660°C during preparation of a partition.

**Example 41** All was the same as that in Example 40, except that a thickness of an intermediate layer was 4 µm, and a single-layer thickness of a packaging layer was 3 µm, so that a thickness of the partition was 10 µm during preparation of a partition.

**Example 42** All was the same as that in Example 40, except that a thickness of an intermediate layer was 1 µm, and a single-layer thickness of a packaging layer was 0.5 µm, so that a thickness of the partition was 2 µm during preparation of a partition.

**Example 43** All was the same as that in Example 29, except that an intermediate layer material was Al, two surfaces of the intermediate layer were both coated with PP, and temperature at which a packaging layer started to soften was 130°C during preparation of a partition. Steps of preparing a partition were as follows: (1) A packaging substance of PP in a packaging layer was evenly dispersed into a dispersant of NMP (N-methylpyrrolidone) to obtain a prepared suspension of the packaging layer, where a concentration of the suspension was 45 wt%. (2) Casting was performed separately on two sides of an intermediate layer of Al with a thickness of 20 µm by using a casting device, to obtain a suspension and prepare a packaging layer of PP with a thickness of 30 µm. (3) A dispersant of NMP in a suspension of the packaging layer was dried at 130°C, to complete the preparation of the partition.

**Example 44** All was the same as that in Example 43, except that an intermediate layer material was 302 stainless steel and temperature at which a packaging layer started to soften was 150°C during preparation of a partition.

**Example 45** All was the same as that in Example 43, except that an intermediate layer material was Al and an electrode assembly was assembled differently during preparation of a partition. Assembling of an electrode assembly: A packaging film (aluminum-plastic film) with a thickness of 90 µm that was obtained through recess-punching was placed in assembly clamping with a recess facing upward, then the electrode assembly A in Preparation Example 4 was placed in the recess, then a partition was placed on the electrode assembly A, so that a side of the partition was in contact with the separator of the electrode assembly A, and external force was applied for tight compression. The semi-finished assembly was placed in other assembly clamping, the electrode assembly B in Preparation Example 4 was placed on the partition, the other side of the partition was in contact with the current collector of the electrode assembly B, then another aluminum-plastic film with a thickness of 90 µm that was obtained through the recess-punching was placed to cover the electrode assembly B with a recess facing downward, and then the two aluminum-plastic films and the partition were heat-sealed together through hot pressing, so that the electrode assembly A and the electrode assembly B were separated by the partition, to obtain the assembled electrode assembly. The assembled electrode assembly had two separate cavities, the electrode assembly A was corresponding to a first cavity, and the electrode assembly B was corresponding to a second cavity.

**Example 46** All was the same as that in Example 45, except that an intermediate layer material was 302 stainless steel and temperature at which a packaging layer started to soften was 150°C during preparation of a partition.

**Example 47** All was the same as that in Example 43, except that an intermediate layer material was Al and an electrode assembly was assembled differently. Assembling of an electrode assembly: A packaging film (aluminum-plastic film) with a thickness of 90 µm that was obtained through recess-punching was placed in assembly clamping with a recess facing upward, then the electrode assembly A in Preparation Example 4 was placed in the recess, then a partition was placed on the electrode assembly A, so that a side of the partition was in contact with the current collector of the electrode assembly A, and external force was applied for tight compression. The semi-finished assembly was placed in other assembly clamping, the electrode assembly B in Preparation Example 4 was placed on the partition, then another aluminum-plastic film with a thickness of 90 µm that was obtained through the recess-punching was placed to cover the electrode assembly B with a recess facing downward, the other side of the partition was in contact with the current collector of the electrode assembly B, and then the two aluminum-plastic films and the partition were heat-sealed together through hot pressing, so that the electrode assembly A and the electrode assembly B were separated by the partition, to obtain the assembled electrode assembly. The assembled electrode assembly had two separate cavities, the electrode assembly A was corresponding to a first cavity, and the electrode assembly B was corresponding to a second cavity.

**Example 48** All was the same as that in Example 47, except that an intermediate layer material was 302 stainless steel and temperature at which a packaging layer started to soften was 150°C during preparation of a partition.

**Example 49** All was the same as that in Example 43, except that an intermediate layer was an Al/Cu composite structure during preparation of a partition.

**Example 50** All was the same as that in Example 29, except that an intermediate layer was a 302 stainless steel/PI composite structure and an electrode assembly was assembled differently during preparation of a partition. Assembling of an electrode assembly: A packaging film (aluminum-plastic film) with a thickness of 90 µm that was obtained through recess-punching was placed in assembly clamping with a recess facing upward, then the electrode assembly A in Preparation Example 4 was placed in the recess, then a partition was placed on the electrode assembly A, so that a side of the partition was in contact with the current collector of the electrode assembly A, and external force was applied for tight compression. The semi-finished assembly was placed in other assembly clamping, the electrode assembly B in Preparation Example 4 was placed on the partition, then another aluminum-plastic film with a thickness of 90 µm that was obtained through the recess-punching was placed to cover the electrode assembly B with a recess facing downward, the other side of the partition was in contact with the current collector of the electrode assembly B, and then the two aluminum-plastic films and the partition were heat-sealed together through hot pressing, so that the electrode assembly A and the electrode assembly B were separated by the partition, to obtain the assembled electrode assembly. The assembled electrode assembly had two separate cavities, the electrode assembly A was corresponding to a first cavity, and the electrode assembly B was corresponding to a second cavity.

**Example 51** All was the same as that in Example 43, except that an intermediate layer material was a PI/Cu/PI composite structure and temperature at which a packaging layer started to soften was 150°C during preparation of a partition.

**Example 52** All was the same as that in Example 50, except that an intermediate layer was a PET/Al/PET composite structure and an electrode assembly was assembled differently during preparation of a partition.

**Example 53** All was the same as that in Example 50, except that an intermediate layer was a 302 stainless steel/Al/302 stainless steel composite structure and a partition was prepared differently during preparation of a partition. Steps of preparing the partition were as follows: (1) A packaging substance of PP in a packaging layer was evenly dispersed into a dispersant of NMP (N-methylpyrrolidone) to obtain a prepared suspension of the packaging layer, where a concentration of the suspension was 45 wt%. (2) Packaging layers were separately prepared on both sides of the intermediate layer with a composite structure by using a 3D printer. (3) A dispersant in a suspension of the packaging layer was dried, to complete the preparation of the partition.

**Example 54** All was the same as that in Example 29, except that a thickness of an intermediate layer of 302 stainless steel was 40 µm, and a single-layer thickness of a packaging layer was 30 µm, so that a thickness of the partition was 100 µm during preparation of a partition.

**Example 55** All was the same as that in Example 29, except that a thickness of the intermediate layer of 302 stainless steel was 25 µm, and a single-layer thickness of a packaging layer was 11 µm, so that a thickness of the partition was 47 µm during preparation of a partition.

**Example 56** All was the same as that in Example 29, except that a thickness of an intermediate layer of 302 stainless steel was 10 µm, and a single-layer thickness of a packaging layer was 10 µm, so that a thickness of the partition was 30 µm during preparation of a partition.

**Example 57** All was the same as that in Example 29, except that a thickness of an intermediate layer of 302 stainless steel was 4 µm, and a single-layer thickness of a packaging layer was 8 µm, so that a thickness of the partition was 20 µm during preparation of a partition.

**Example 58** All was the same as that in Example 29, except that a thickness of an intermediate layer of 302 stainless steel was 2 µm, and a single-layer thickness of a packaging layer was 2 µm, so that a thickness of the partition was 6 µm during preparation of a partition.

**Example 59** All was the same as that in Example 40, except that a thickness of the intermediate layer of Al was 40 µm, and a single-layer thickness of a packaging layer was 30 µm, so that a thickness of the partition was 100 µm during preparation of a partition.

**Example 60** All was the same as that in Example 40, except that a thickness of an intermediate layer of Al was 30 µm, and a single-layer thickness of a packaging layer was 10 µm, so that a thickness of the partition was 50 µm during preparation of a partition.

**Example 61** All was the same as that in Example 40, except that a thickness of an intermediate layer of Al was 8 µm, and a single-layer thickness of a packaging layer was 10 µm, so that a thickness of the partition was 28 µm during preparation of a partition.

**Example 62** All was the same as that in Example 40, except that a thickness of an intermediate layer of Al was 6 µm, and a single-layer thickness of a packaging layer was 7 µm, so that a thickness of the partition was 20 µm during preparation of a partition.

**Example 63** All was the same as that in Example 39, except that a thickness of the intermediate layer of Cu was 40 µm, and a single-layer thickness of a packaging layer was 30 µm, so that a thickness of the partition was 100 µm during preparation of a partition.

**Example 64** All was the same as that in Example 39, except that a thickness of the intermediate layer of Cu was 25 µm, and a single-layer thickness of a packaging layer was 10 µm, so that a thickness of the partition was 45 µm during preparation of a partition.

**Example 65** All was the same as that in Example 39, except that a thickness of the intermediate layer of Cu was 5 µm, and a single-layer thickness of a packaging layer was 8 µm, so that a thickness of the partition was 21 µm during preparation of a partition.

**Example 66** All was the same as that in Example 39, except that a thickness of the intermediate layer of Cu was 4 µm, and a single-layer thickness of a packaging layer was 8 µm, so that a thickness of the partition was 20 µm during preparation of a partition.

**Example 67** All was the same as that in Example 39, except that a thickness of the intermediate layer of Cu was 2 µm, and a single-layer thickness of a packaging layer was 3 µm, so that a thickness of the partition was 8 µm during preparation of a partition.

**Example 68** All was the same as that in Example 52, except that an intermediate layer was a penta-layer composite structure of PET/302 stainless steel/Al/302 stainless steel/PET during preparation of a partition.

**Comparative Example** 1 Single-electrode lithium-ion battery: The positive electrode plate in Preparation Example 2 and the negative electrode plate in Preparation Example 1 were laminated, there was a PE separator with a thickness of 15 µm between the positive electrode plate and the negative electrode plate, aluminum foil was used for packaging, packaging was performed, the electrolyte in Preparation Example 3 was injected, and tabs of the positive and negative electrode plates were separately extended out of outer packaging. The lithium-ion battery was obtained.

**Comparative Example** 2 As shown in FIG. 7, two separate electrode assemblies were externally connected in series. Injection and packaging of an electrode assembly: Four corners of electrode assemblies A and B in Preparation Example 4 were fastened, packaging was performed by using an aluminum-plastic film, then peripheral sides of the packaging were sealed, the electrolyte in Preparation Example 3 was respectively injected into the aluminum-plastic film, and all the tabs of the electrode assemblies A and B were extended out of the aluminum-plastic film. A positive tab of the electrode assembly A and a negative tab of the electrode assembly B were welded through laser welding, to implement a serial connection between the electrode assemblies A and B, thereby completing battery assembly.

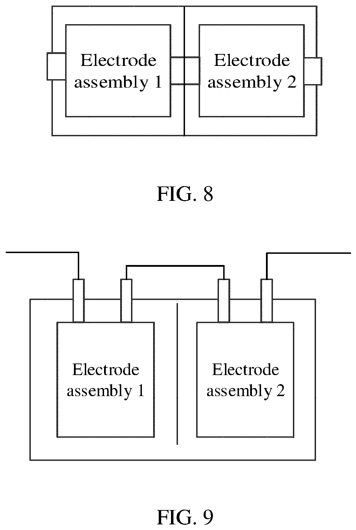

**Comparative Example** 3 As shown in FIG. 8, two separate electrode assemblies were connected head-to-tail. Assembling, injection, and packaging of an electrode assembly: A positive tab of the electrode assembly in Preparation Example 4 was coated with a sealing adhesive, and a negative electrode of an electrode assembly A and a positive tab of the electrode assembly B were welded, to implement a serial connection between electrodes of the electrode assembly A and the electrode assembly B. After the serial connection was completed, the electrode assemblies were packaged in a formed aluminum-plastic film. During packaging, in addition to sealing on a top side of an outer contour, each electrode assembly was sealed and packaged in a width direction of the electrode assembly along a sealing adhesive on the positive electrode, to implement isolation of cavities in which the electrode assemblies were located. The electrolyte in Preparation Example 3 was respectively injected into the cavities in which the two electrode assemblies were located. After packaging, the positive tab was extended out on a side in a length direction of the electrode assembly, the negative tab was extended out on the other side, and remaining tabs connected in series were all in the outer packaging of the electrode assembly.

**Comparative Example 4** As shown in FIG. 9, two separate electrode assemblies were connected in parallel. Assembling of the electrode assembly: The electrode assembly A in Preparation Example 4 was placed on a side of a formed aluminum-plastic film, and covered with the aluminum-plastic film on the top, a side with the electrode assembly A was compressed, and an adhesive was applied on an edge of the aluminum-plastic film in which the electrode assembly A was placed, upper and lower aluminum-plastic films were compressed tightly, and the adhesive was applied in a length direction of the electrode assembly from an end of the electrode assembly to a top packaging zone for solidification and forming. In the semi-finished product, the electrode assembly B in Preparation Example 4 was placed in a vacant zone on a side face of the electrode assembly A, and the entire aluminum-plastic film was top-packaged. The top packaging and an adhesive coated zone intersect perpendicularly, came into contact and were sealed, so that the electrode assemblies A and B were respectively in separate sealed cavities. Injection and packaging of the electrode assembly: The electrolyte in Preparation Example 3 was respectively injected into the cavities in which the two electrode assemblies were located and the aluminum-plastic film was packaged, tabs of the two electrode assemblies were extended out of outer packaging, and a positive tab of the electrode assembly A and a negative tab of the electrode assembly B were welded, to ensure that the two electrode assemblies are in two separate sealed cavities and there is no possibility of electrolyte exchange.

**Comparative Example** 5 Lamination was implemented based on a single-package thickness without a partition. Assembling of an electrode assembly: A packaging film with a thickness of 90 µm that was obtained through recess-punching was placed in assembly clamping with a recess facing upward, the packaging film was the aluminum-plastic film, then the electrode assembly A in Preparation Example 4 was placed in the recess, then the electrode assembly B in Preparation Example 4 was placed on the electrode assembly A, and the electrode assembly A and the electrode assembly B were separated by the separator and tightly compressed. Then, the electrode assembly B was covered with another packaging film with the recess facing downward, and peripheral sides were heat-sealed. Injection and packaging of an electrode assembly: The electrolyte in Preparation Example 3 was injected into cavities in which the two electrode assemblies were located, and peripheral sides were packaged after the injection. The positive and negative tabs of the electrode assembly were extended out of the outer packaging, and the tabs were staggered when disposed, to avoid a sealing failure caused by stacking of the tabs in a thickness direction. A positive tab of the electrode assembly A and a negative tab of the electrode assembly B were welded together, to implement a serial connection between the two electrode assemblies.

**Comparative Example 6** A common single-layer separator of PP was directly used as the partition, a thickness was 20 µm, and temperature of starting to soften was 165°C. Assembling of an electrode assembly: A packaging film (aluminum-plastic film) with a thickness of 90 µm that was obtained through recess-punching was placed in assembly clamping with a recess facing upward, then the electrode assembly A in Preparation Example 4 was placed in the recess, then a separator of PP was placed on the electrode assembly A, and external force was applied for tight compression. The semi-finished assembly was placed in other assembly clamping, the electrode assembly B in Preparation Example 4 was placed on the separator of PP, then another aluminum-plastic film with a thickness of 90 µm that was obtained through the recess-punching was placed to cover the electrode assembly B with a recess facing downward, and then the two aluminum-plastic films and the separator of PP were heat-sealed together through hot pressing, so that the electrode assembly A and the electrode assembly B were separated by the separator of PP, to obtain the assembled electrode assembly. The assembled electrode assembly had two separate cavities, the electrode assembly A was corresponding to a first cavity, and the electrode assembly B was corresponding to a second cavity. Injection and packaging of the electrode assembly: The electrolyte in Preparation Example 3 was injected into the cavities in which the two electrode assemblies were located, and peripheral sides were packaged after the injection. The positive and negative tabs of the electrode assemblies were extended out of the outer packaging, and a positive tab of the electrode assembly A and a negative tab of the electrode assembly B were welded, to implement a serial connection between the two electrode assemblies.

**Comparative Example 7** All was the same as that in Comparative Example 6, except that a single layer of PP was used as a partition, a thickness of the partition was 20 µm, and temperature of starting to soften was 165°C. **Comparative Example 8** All was the same as that in Comparative Example 6, except that a single layer of PI was used as a partition, a thickness of the partition was 20 µm, and temperature of starting to soften was 334°C. **Comparative Example 9** All was the same as that in Comparative Example 6, except that a single layer of stainless steel was used as a partition, a thickness of the partition was 20 µm, and a melting point was 1440°C.

**<Performance** Test> The partition for the electrochemical apparatus and the bipolar lithium-ion battery prepared in each example and each comparative example were tested in the following methods:

**Interface adhesion force Fi test of a packaging layer and an intermediate layer:** (1) A sealing zone was extracted from an electrode assembly (lithium-ion battery) as a sample 1; (2) the sample 1 was cooled in liquid nitrogen, and outer packaging on a side of the packaging layer was ground off, to expose an interface between the packaging layer and the intermediate layer; (3) the sample 1 was cut into a test strip with a width of 8 mm and a length of 6 cm, to ensure that the packaging layer completely covers the intermediate layer in this zone to obtain a sample 2; (4) high-viscosity and high-strength adhesive paper was pasted on a surface of a packaging layer of the sample 2 (a model was not particularly limited, provided that the adhesive paper was tightly bound to the surface of the packaging layer); (5) the high-viscosity and high-strength adhesive paper was slowly removed from the surface of the sample 2 at an angle of 90° by using a Gotech tensile machine, so that the packaging layer and the intermediate layer were separated at the interface; and (6) the stable tensile force upon the interface separation was recorded, and based on this, an interface adhesion force between the packaging layer and the intermediate layer was calculated.

**Interface adhesion force F₂ test of a packaging layer and outer packaging:** (1) A sealing zone was extracted from an electrode assembly (lithium-ion battery) as a sample 1; (2) the sample 1 was cooled in liquid nitrogen, and an intermediate layer on a side of the packaging layer was ground off, to expose an interface between the packaging layer and outer packaging; (3) the sample 1 was cut into a test strip with a width of 8 mm and a length of 6 cm, to ensure that the packaging layer completely covers the outer packaging in this zone to obtain a sample 2; (4) high-viscosity and high-strength adhesive paper was pasted on a surface of an adhesive coated layer of the sample 2 (a model was not particularly limited, provided that the adhesive paper was tightly bound to the surface of the adhesive coated layer); (5) the high-viscosity and high-strength adhesive paper was slowly removed from the surface of the sample 2 at an angle of 90° by using a Gotech tensile machine, so that the packaging layer and the outer packaging were separated at the interface; and (6) the stable tensile force upon the interface separation was recorded, and based on this, an interface adhesion force between the packaging layer and the outer packaging was calculated.

**Packaging strength test:** (1) A sealing zone was extracted from an electrode assembly (lithium-ion battery) as a sample 1; (2) the sample 1 was cut into a test strip with a width of 8 mm, to ensure that the test strip completely contains the entire sealing zone and outer packaging on the two sides of the sealing zone is also intact, to obtain a sample 2; (3) the outer packaging on both sides was removed at an angle of 180° by using a Gotech tensile machine, so that two layers of outer packaging were separated from each other in the packaging zone; and (4) the stable tensile force upon the separation of the two layers of outer packaging was recorded, and based on this, packaging strength was calculated.

**Packaging zone damage test of a 1.5m drop test:** (1) A lithium-ion battery sample fell freely from a height of 1.5 meters to a smooth marble surface, 20 groups of samples were tested, electrode assembly (lithium-ion battery) samples after the drop test were disassembled, and a sealing zone was removed separately for use; (2) merbromin was dropwise added in the sealing zone, and the samples were allowed to stand for 12h, with the merbromin in the upper part and the sealing zone in the lower part spatially; (3) then, through the packaging strength test, the sealing zone was damaged and a status of the merbromin seeping into the sealing zone was observed; (4) if a depth of seeping by the merbromin into the sealing zone exceeded 1/2 of a width of the sealing zone, the packaging zone was determined to be damaged, otherwise, the packaging zone was determined to be undamaged.

**Discharge energy density ED test:** The lithium-ion battery was allowed to stand for 30 minutes at room temperature, and was charged to a voltage of 4.45V (nominal voltage in Comparative Example 1) or 8.90V (nominal voltage in other comparative examples and all the examples) with a constant current at a charging rate of 0.05C, and then the electrochemical apparatus was discharged to 3.00V (nominal voltage in Comparative Example 1) or 6.00V (in other comparative examples and all the examples) at a rate of 0.05C, and the charge/discharge steps were repeated for 3 cycles to complete chemical conversion of the to-be-tested electrochemical apparatus (lithium-ion battery). After the chemical conversion of the electrochemical apparatus (lithium-ion battery) was completed, the electrochemical apparatus was charged to a voltage of 4.45V (nominal voltage in Comparative Example 1) or 8.90V (in other comparative examples and all the examples) with a constant current at a charging rate of 0.1C, and then the electrochemical apparatus was discharged to 3.00V (nominal voltage in Comparative Example 1) or 6.00V (in other comparative examples and all the examples) at a discharge rate of 0.1C, a discharge capacity of the electrochemical apparatus was recorded, and then an energy density during discharge at 0.1C was calculated: energy density (Wh/L)= discharge capacity (Wh)/volume of lithium-ion battery (L).

**Discharge capacity after 50 cycles/First discharge capacity** Qso/Qo (%) **test:** At 25°C, the lithium-ion battery was charged to 4.45V (nominal voltage in Comparative Example 1) or 8.90V (in other comparative examples and all the examples) with a constant current at 0.5C, and was charged to 0.025C with a constant voltage, after 5 minutes of standing, the lithium-ion battery was discharged to 3.00V (nominal voltage in Comparative Example 1) or 6.00V (in other comparative examples and all the examples) at 0.5C, a capacity obtained in this step was used as an initial capacity, and after cyclic charge/discharge tests were performed 50 times at 0.5C during charging/0.5C during discharging, a ratio of a capacity of the lithium-ion battery to the initial capacity was calculated.

**3C charge temperature rise test:** At 25°C, the lithium-ion battery was charged to 4.45V (nominal voltage in Comparative Example 1) or 8.90V (in other comparative examples and all the examples) with a constant current at 3C, and was charged to 0.025C with a constant voltage. During the process, a thermocouple was directly placed above a center of a battery cell (lithium-ion battery) to test a temperature change during the charging process in real time, and recorded maximum temperature minus the test temperature of 25°C was the 3C charge temperature rise.

**Nail penetration pass rate test:** The to-be-tested lithium-ion battery was charged to a voltage of 4.45V (nominal voltage in Comparative Example 1) or 8.90V (in other comparative examples and all the examples) with a constant current at a rate of 0.05C, and then was charged to a current of 0.025C (cutoff current) with a constant voltage, so that the battery was fully charged, and an appearance of the battery before the test was recorded. The nail penetration test was conducted for the battery in an environment of 25±3°C. A nail diameter was 4 mm, and a penetration speed was 30 mm/s. Nail penetration locations were respectively a location 15 mm away from an edge of an electrode assembly with an Al tab and a location 15 mm away from an edge of an electrode assembly with a Ni tab. After the test was conducted for 3.5 minutes or surface temperature of the electrode assembly dropped to 50°C, the test was stopped. Ten electrode assemblies were used as a group to observe battery statuses during the test. A pass criterion was that the battery did not burn or explode. When passing 9 of 10 nail penetration tests, the battery was determined to pass the nail penetration test.

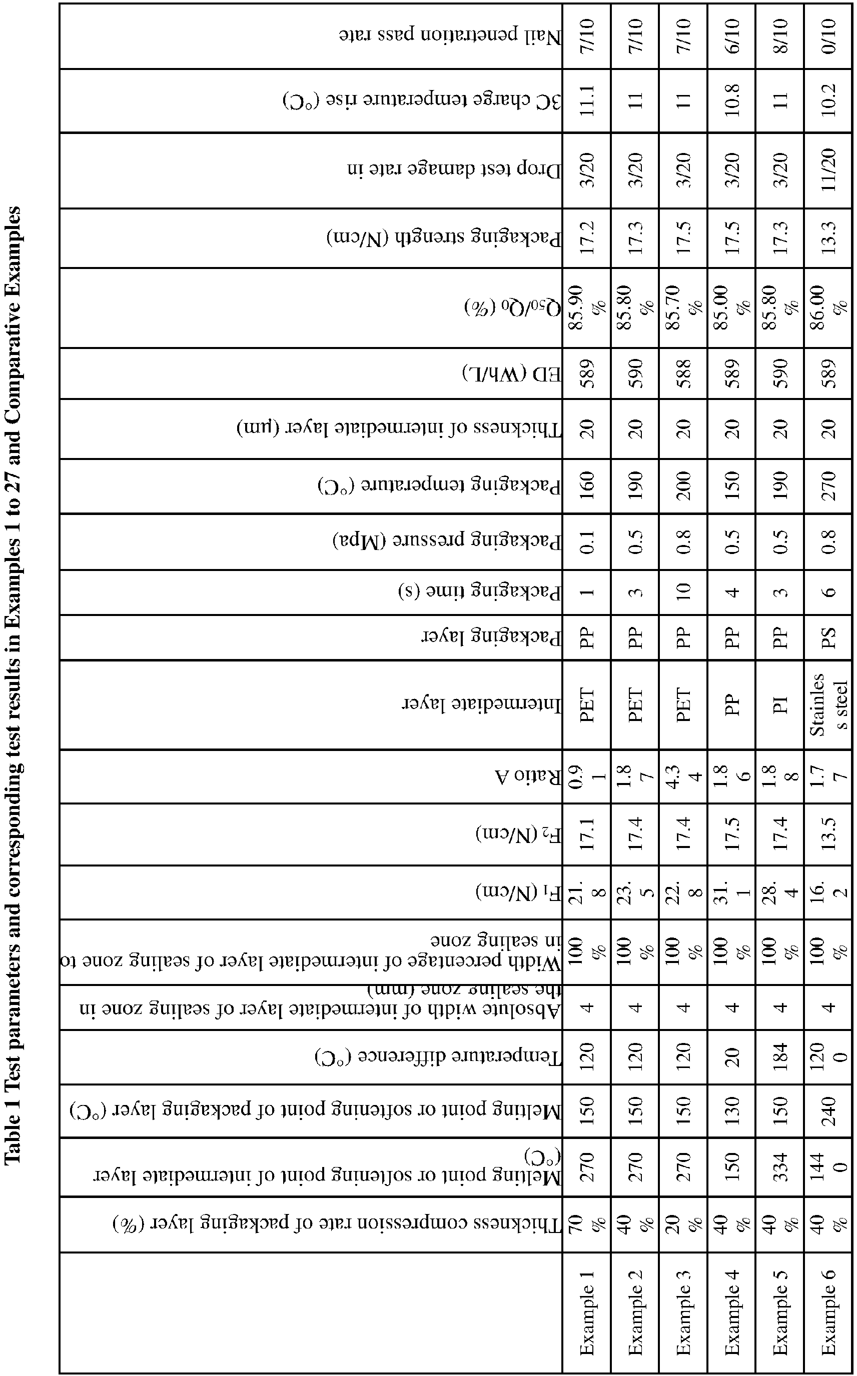

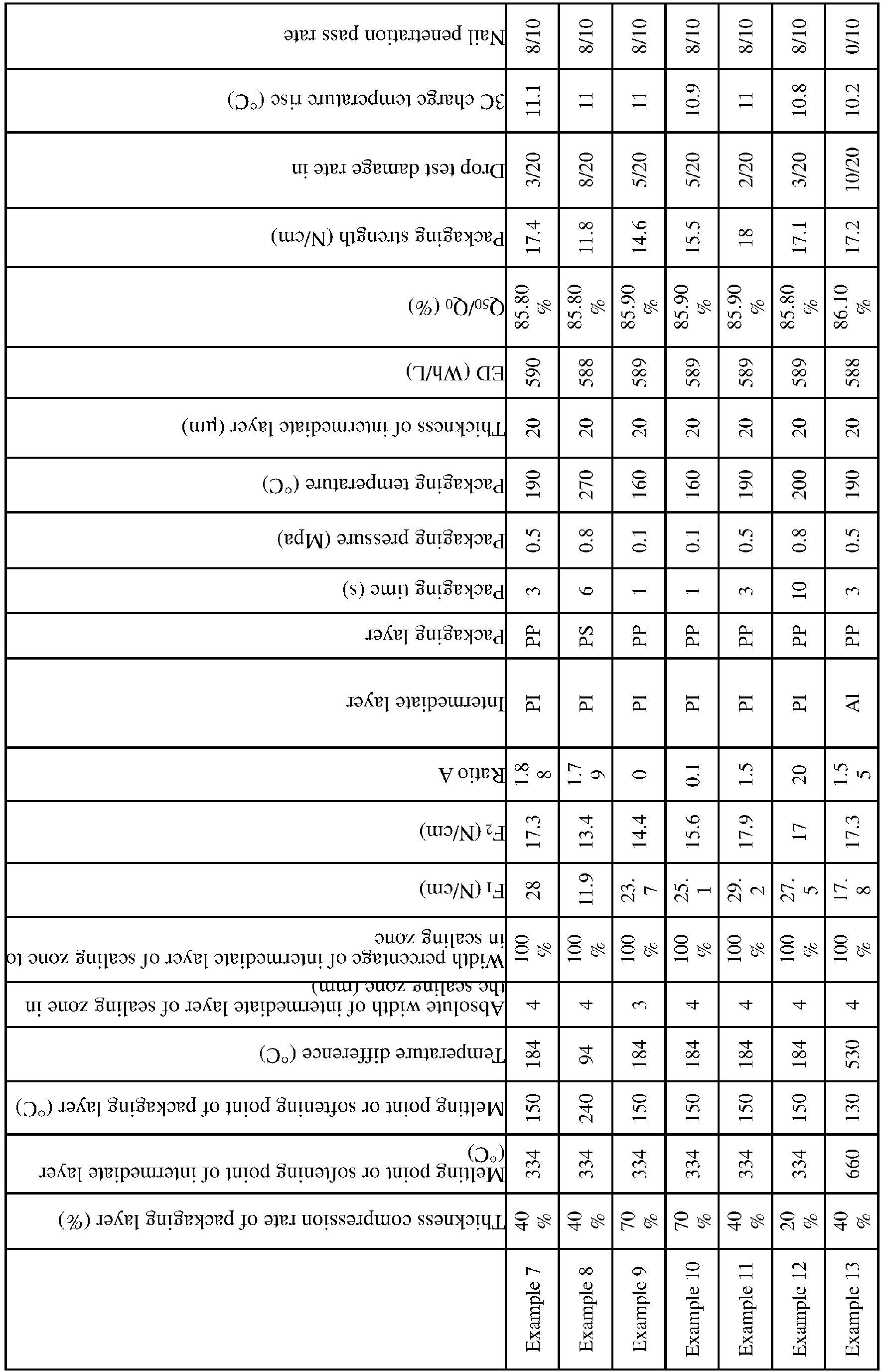

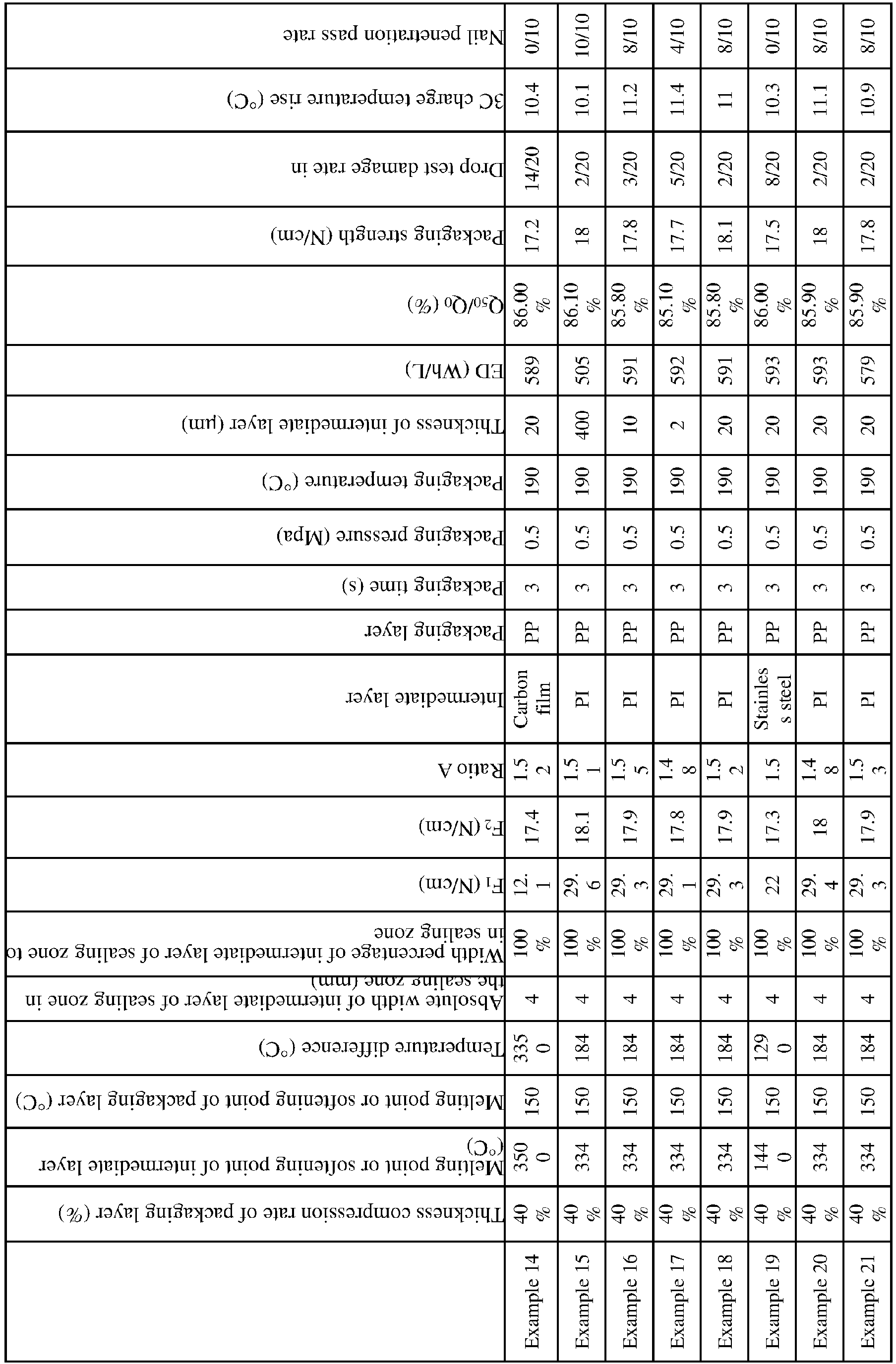

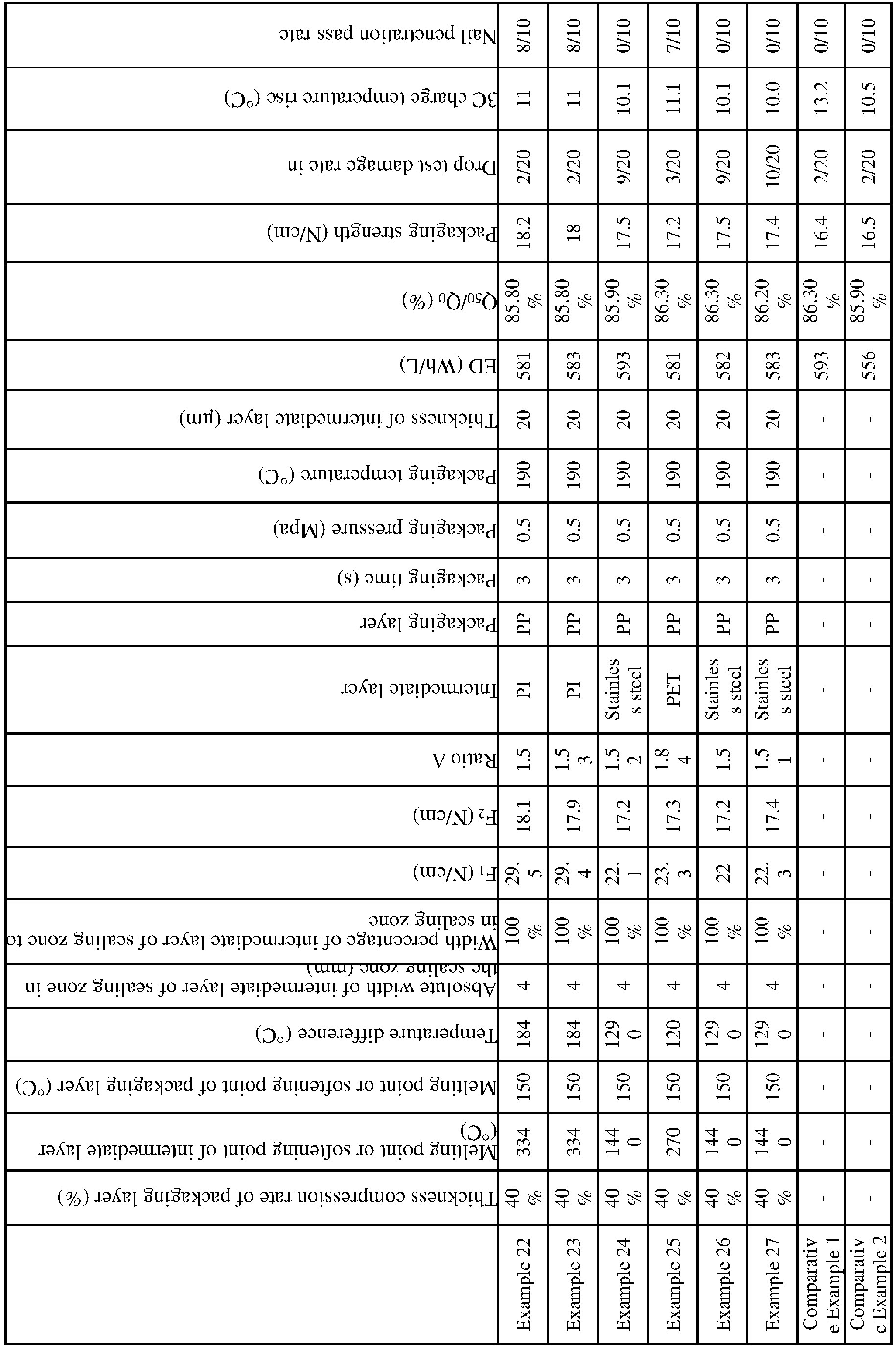

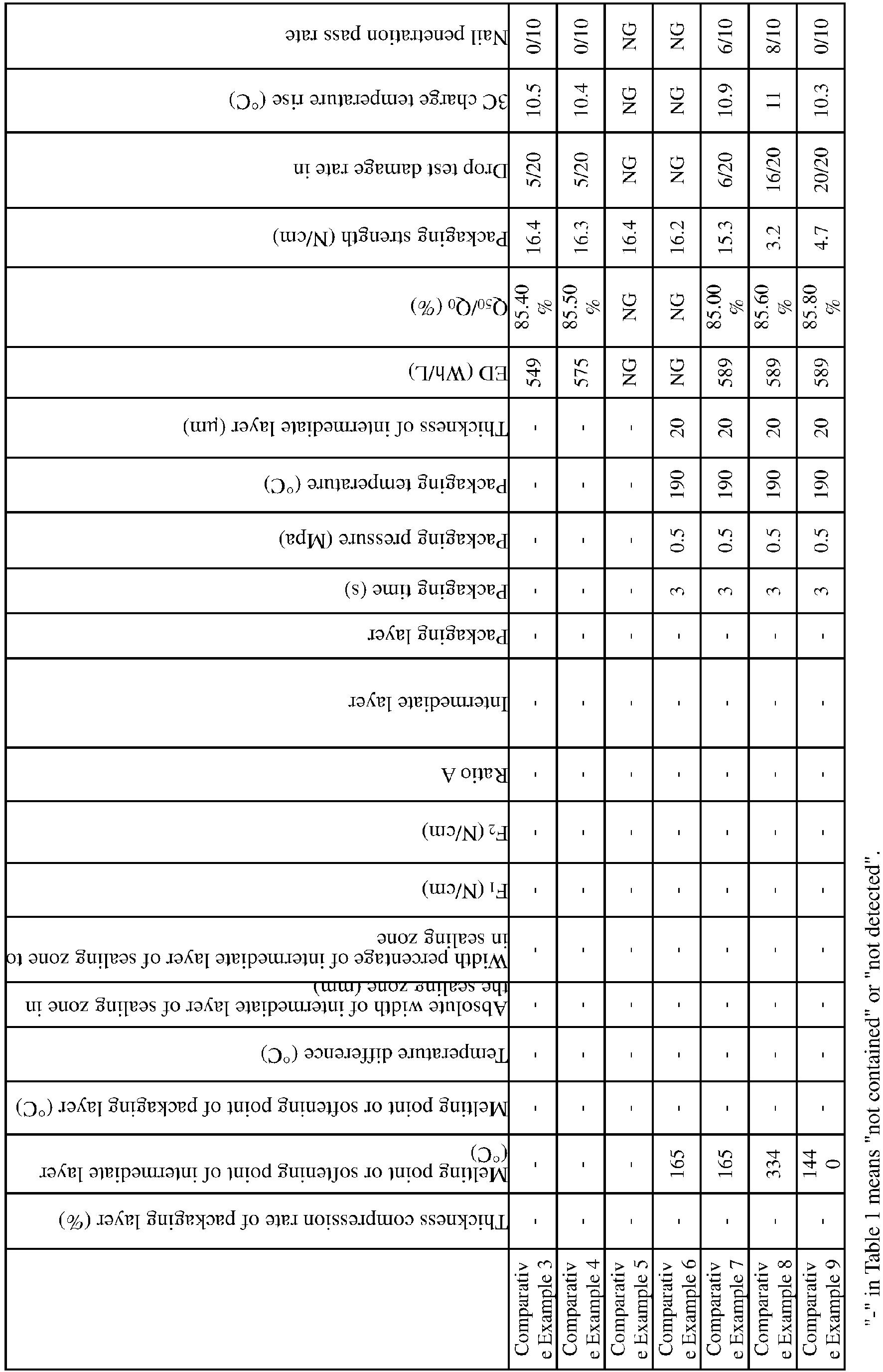

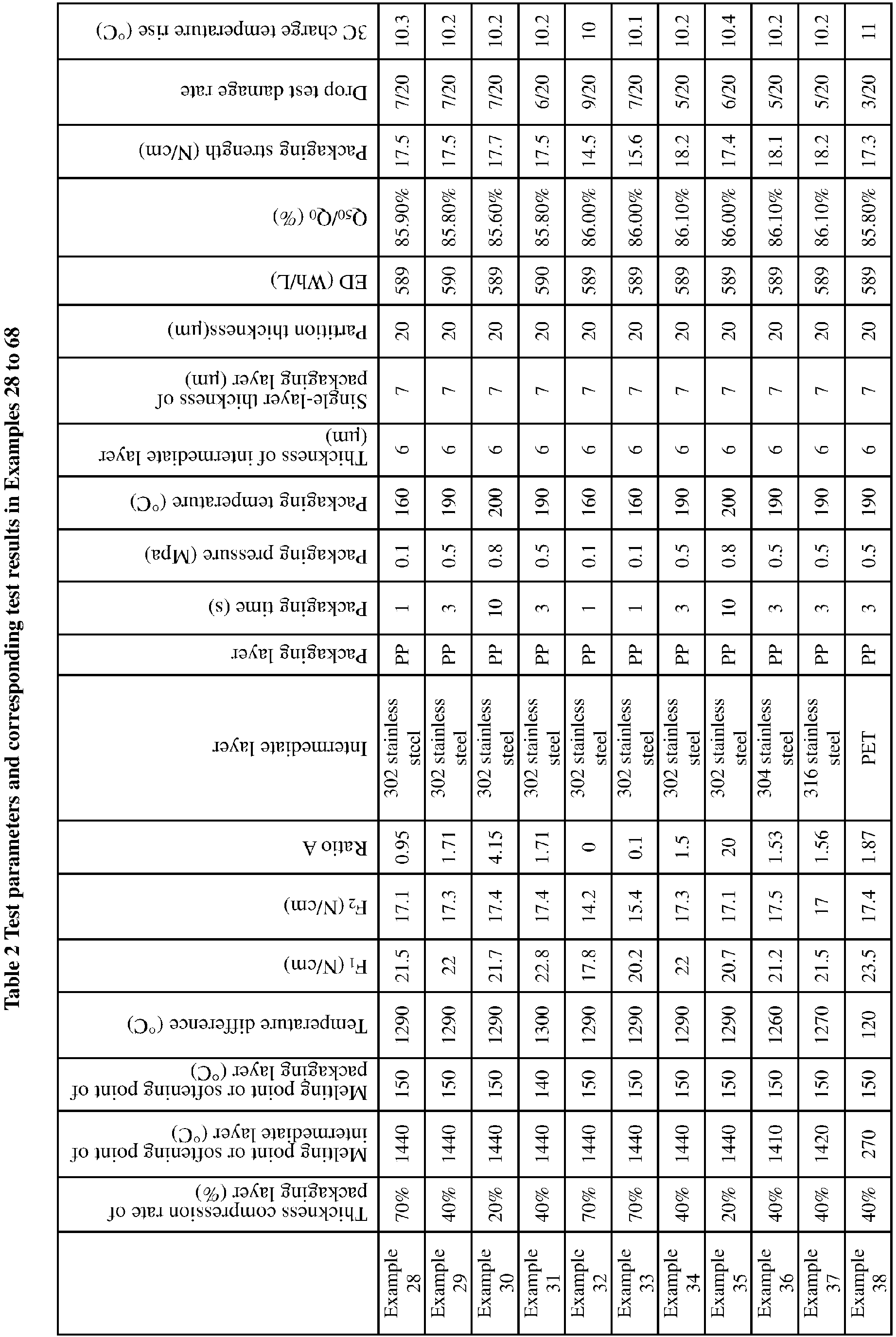

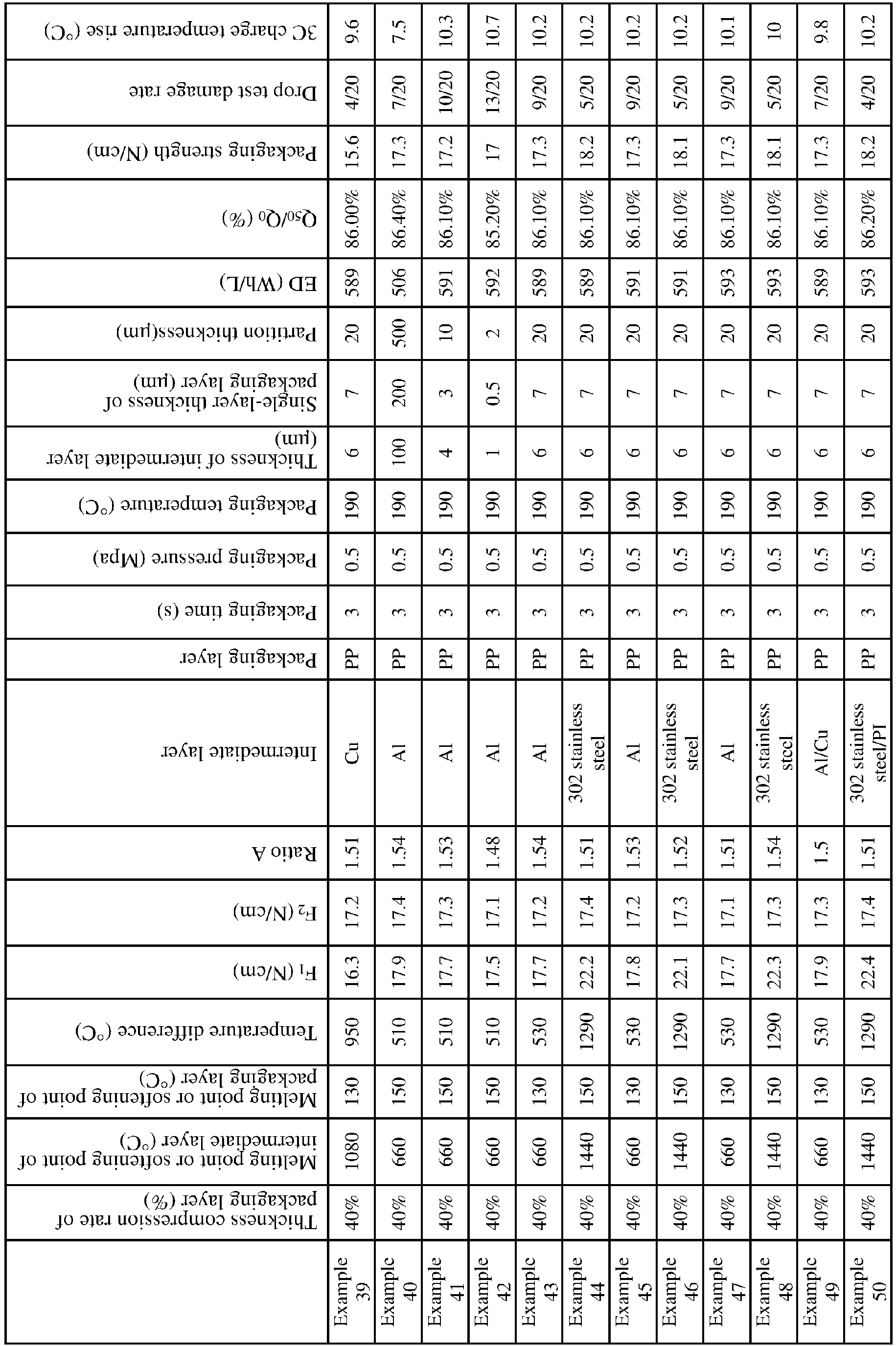

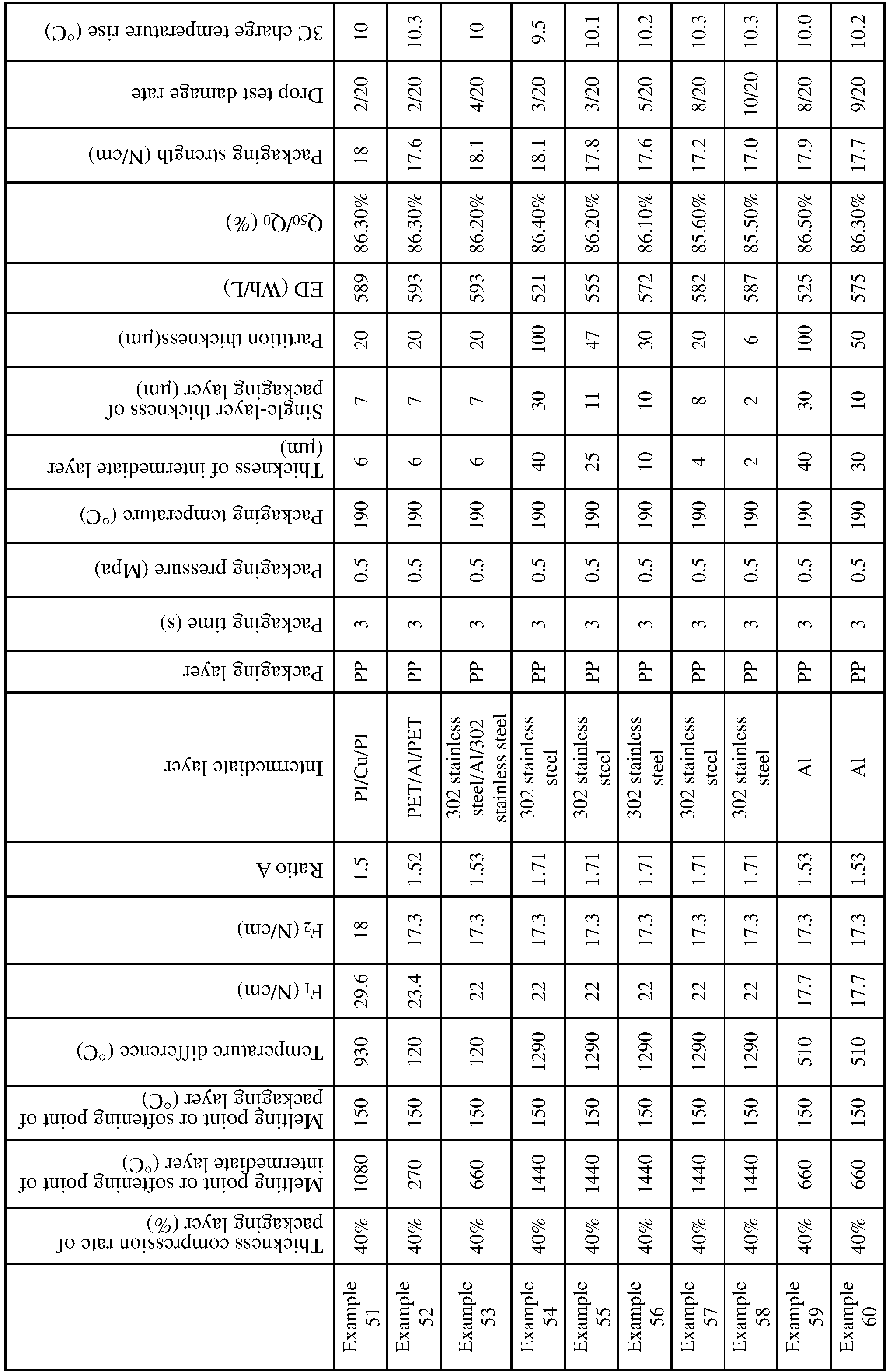

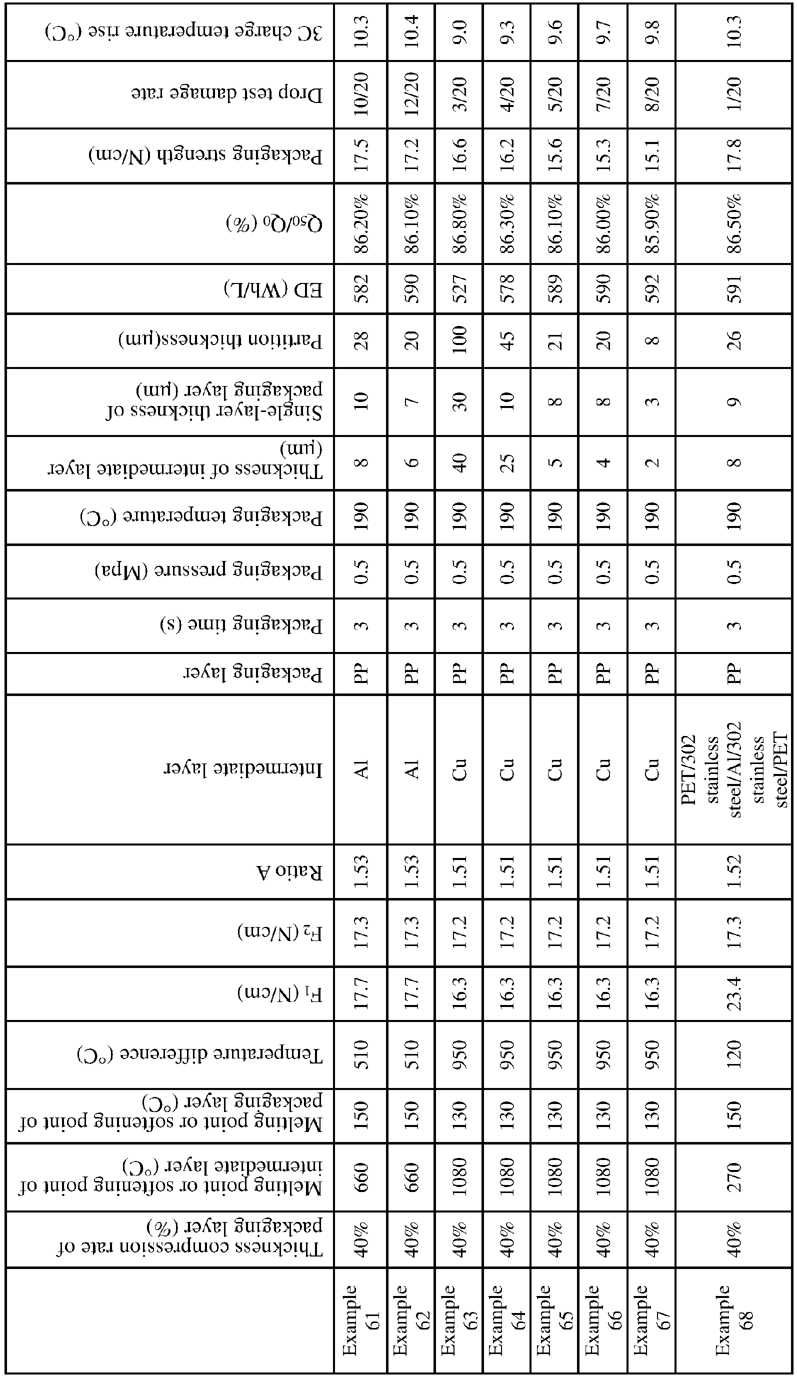

As shown in Table 1, compared with Comparative Examples 2 to 4, except Example 15, an energy density of the lithium-ion battery in the examples of this application increased. It can be seen that the lithium-ion battery with a serial connection structure of partitions in the examples of this application had a higher energy density than an existing lithium-ion battery with an external serial connection structure of two separate electrode assemblies, a lithium-ion battery with a head-to-tail serial connection structure of two separate electrode assemblies, and a lithium-ion battery with a parallel connection structure of two separate electrode assemblies (NG means "not going").

Compared with that in Comparative Examples 1 to 9, the packaging strength of the lithium-ion battery in Examples 1 to 5, Example 7, and Examples 11 to 27 of this application increased, and the pass ratio of nail penetration of the lithium-ion battery in Examples 1 to 5, Examples 7 to 12, Examples 15 and 16, Example 18, Example 20, and Example 25 of this application was higher than that in Comparative Examples 1 to 4, and Comparative Example 9; compared with that in Comparative Examples 1 and 2, the drop damage ratio in Examples 1 to 10, Examples 12 to 14, Examples 16 and 17, Example 19, and Examples 24 to 27 of this application increased, but the discharge voltage of the lithium-ion battery with the single electrode assembly in Comparative Example 1 was low, and the lithium-ion battery with the external serial connection structure of the two separate electrode assemblies in Comparative Example 2 required the discharge voltages of the two electrode assemblies to be approximately the same, otherwise a short circuit was prone to occur, and the drop damage ratio in Examples 11, 15, 18, and 20 of this application was still the same as that in Comparative Examples 1 and 2. Compared with that in Comparative Examples 3 and 4, the drop damage ratio in Examples 1 to 5, Example 7, Examples 11 and 12, Examples 15 to 18, Examples 20 to 23, and Example 25 of this application decreased, indicating that the drop damage ratio was lower than that in the existing lithium-ion battery with the head-to-tail serial connection structure of the two separate electrode assemblies and the lithium-ion battery with the parallel connection structure of the two separate electrode assemblies; and compared with that in Comparative Examples 8 and 9, the drop damage ratio of the lithium-ion battery of this application significantly decreased, indicating that applying the prepared partition in this application to the lithium-ion battery can help better resist the drop damage.

A 3C charge temperature rise of the lithium-ion battery of this application decreased compared with that of the single-electrode lithium-ion battery in Comparative Example 1. The charge temperature rise of the lithium-ion battery of this application basically did not change compared with that in Comparative Examples 2 to 4 and Comparative Examples 7 to 9.

Compared with that in Comparative Examples 1 to 4 and Comparative Examples 7 to 9, the ratio of the discharge capacity after 50 cycles to the first discharge capacity of the lithium-ion battery of this application basically did not change, achieving good cycling performance.

As shown in Table 2, it can be seen from Examples 28 to 39 and Examples 41 to 68, and Comparative Examples 2 to 4 that an energy density of the lithium-ion battery in this application increased, the lithium-ion battery with a serial connection structure of partitions in the examples of this application had a higher energy density than an existing lithium-ion battery with an external serial connection structure of two separate electrode assemblies, a lithium-ion battery with a head-to-tail serial connection structure of two separate electrode assemblies, and a lithium-ion battery with a parallel connection structure of two separate electrode assemblies (NG means "not go").

It can be seen from Examples 28 to 31, Examples 34 to 38, Examples 40 to 63, Example 68, and Comparative Examples 1 to 9 that the packaging strength of the lithium-ion battery of this application increased.

It can be seen from Examples 28 to 68, and Comparative Examples 8 and 9 that the drop damage ratio of the lithium-ion battery of this application significantly decreased, indicating that applying the prepared partition in this application to the lithium-ion battery can help better resist the drop damage.

It can be seen from Examples 28 to 68, and Comparative Example 1 that a 3C charge temperature rise of the lithium-ion battery of this application was lower than that in Comparative Example 1, and basically did not change compared with that in other comparative examples.

It can be further seen from Examples 28 to 68, Comparative Examples 1 to 4, and Comparative Examples 7 to 9 that the ratio of the discharge capacity after 50 cycles to the first discharge capacity of the lithium-ion battery of this application basically did not change, achieving good cycling performance.

It can be seen that applying the prepared partition in this application to the lithium-ion battery can help improve the packaging reliability of the lithium-ion battery, and good technical effects are achieved.

The foregoing descriptions are merely preferable embodiments of this application, but are not intended to limit this application. Any modification, equivalent replacement, or improvement made without departing from the spirit and principle of this application shall fall within the protection scope of this application.

## Claims

1. A partition for an electrochemical apparatus, with ionic insulation, comprising an intermediate layer and packaging layers, wherein the packaging layers are located on upper and lower surfaces of the intermediate layer; and temperature at which the packaging layers start to soften is at least 10°C lower than temperature at which the intermediate layer starts to soften.

2. The partition according to claim 1, wherein a material of the intermediate layer comprises at least one of a carbon material, a first polymer material, or a metal material; and a material of the packaging layers comprises a second polymer material.

3. The partition according to claim 1, wherein an area of the packaging layer accounts for 30% to 100% of an area of the intermediate layer.

4. The partition according to claim 1, wherein there are packaging layers on peripheral edges of two surfaces of the intermediate layer.

5. The partition according to claim 1, wherein there is a packaging layer on at least one surface of the intermediate layer.

6. The partition according to claim 1, wherein the intermediate layer comprises a first structural layer and a second structural layer that are laminated, and there are packaging layers on peripheral edges of two surfaces of the first structural layer and the second structural layer that face away from each other.

7. The partition according to claim 1, wherein the intermediate layer comprises a first structural layer and a second structural layer and a third structural layer located on both sides of the first structural layer, and there is a packaging layer on at least one surface of the second structural layer and the third structural layer.

8. The partition according to claim 2, wherein the carbon material comprises at least one of carbon felt, a carbon film, carbon black, acetylene black, fullerene, a conductive graphite film, or a graphene film;
the first polymer material comprises: at least one of polyethylene terephthalate, polybutylene terephthalate, polyethylene naphthalate, polyether ether ketone, polyimide, polyamide, polyethylene glycol, polyamide-imide, polycarbonate, cyclic polyolefin, polyphenylene sulfide, polyvinyl acetate, polytetrafluoroethylene, polymethylene naphthalene, polyvinylidene fluoride, polyethylene naphthalate, polypropylene carbonate, poly(vinylidene fluoride-hexafluoropropylene), poly(vinylidene fluoride-co-chlorotrifluoroethylene), silicone, vinylon, polypropylene, acid anhydride modified polypropylene, polyethylene, ethylene and copolymerthereof, polyvinyl chloride, polystyrene, polyether nitrile, polyurethane, polyphenylene ether, polyester, polysulfone, amorphous α-olefin copolymer, or a derivative of the foregoing substances;
the metal material comprises at least one of Ni, Ti, Ag, Au, Pt, Fe, Co, Cr, W, Mo, Pb, In, Zn, Al, Cu, or stainless steel; and
the second polymer material comprises: polypropylene, acid anhydride modified polypropylene, polyethylene, ethylene and copolymer, polyvinyl chloride, polystyrene, polyether nitrile, polyurethane, polyamide, polyester, amorphous α-olefin copolymer, or a derivative of the foregoing substances.

9. The partition according to claim 1, wherein the partition has at least one of the following characteristics:
(a) a thickness of the partition is 2 µm to 500 µm;
(b) temperature at which a material of the intermediate layer starts to soften is greater than 130°C; and
(c) temperature at which a material of the packaging layer starts to soften is 120°C to 240°C.

10. The partition according to claim 1, wherein the partition has at least one of the following characteristics:
(a) a thickness of the partition is 5 µm to 50 µm;
(b) temperature at which a material of the intermediate layer starts to soften is greater than 150°C; and
(c) temperature at which a material of the packaging layer starts to soften is 130°C to 170°C.

11. An electrochemical apparatus, wherein the electrochemical apparatus comprises at least one partition according to any one of claims 1 to 10, at least two electrode assemblies, an electrolyte, and outer packaging, and the electrode assemblies are located in a separate sealed cavity.

12. The electrochemical apparatus according to claim 11, wherein an outermost layer of the electrode assembly comprises a separator, and the separator is adjacent to the partition.

13. The electrochemical apparatus according to claim 11, wherein an outermost layer of at least one electrode assembly comprises a separator, and the separator is adjacent to the partition; and an outermost layer of at least one electrode assembly comprises a current collector, and the current collector is adjacent to the other side of the partition.

14. The electrochemical apparatus according to claim 11, wherein an outermost layer of the electrode assembly comprises a current collector, the current collector is adjacent to the partition, and current collectors of electrode assemblies on both sides of the partition have opposite polarities, and the partition is selected from at least one of Ni, Ti, Ag, Au, Pt, Fe, Co, Cr, W, Mo, Pb, In, Zn, or stainless steel.

15. The electrochemical apparatus according to claim 13, wherein the partition is of electronic insulation, an outermost layer of the electrode assembly comprises a current collector, and the current collector is adjacent to the partition.

16. An electronic apparatus, wherein the electronic apparatus comprises the electrochemical apparatus according to any one of claims 11 to 15.
